(19) Europäisches Patentamt
European Patent Office
Office européen des brevets

(11) **EP 4 212 771 B1**

(12) **EUROPEAN PATENT SPECIFICATION**

(45) Date of publication and mention
of the grant of the patent:
**23.10.2024 Bulletin 2024/43**

(21) Application number: **20785999.2**

(22) Date of filing: **09.09.2020**

(51) International Patent Classification (IPC):
**F22G 1/10** *(2006.01)* **F01K 13/00** *(2006.01)*

(52) Cooperative Patent Classification (CPC):
**F22G 1/10; F01K 13/00**

(86) International application number:
**PCT/ES2020/070540**

(87) International publication number:
**WO 2022/053720 (17.03.2022 Gazette 2022/11)**

(54) **SYSTEM, METHODS AND APPARATUSES FOR CONVERTING THERMAL ENERGY INTO MECHANICAL ENERGY**

SYSTEM, VERFAHREN UND VORRICHTUNGEN ZUR UMWANDLUNG VON WÄRMEENERGIE IN MECHANISCHE ENERGIE

SYSTÈMES, MÉTHODES ET APPAREILS POUR CONVERTIR L'ÉNERGIE THERMIQUE EN ÉNERGIE MÉCANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.07.2023 Bulletin 2023/29**

(60) Divisional application:
**24200169.1**
**24200186.5**

(73) Proprietor: **THE OAK DALE RESOURCES, S.L.**
**28660 Boadilla del Monte (Madrid) (ES)**

(72) Inventor: **SAVCHENKO, Mikhail**
**28660 BOADILLA DEL MONTE (Madrid) (ES)**

(74) Representative: **Ungria López, Javier**
**Avda. Ramón y Cajal, 78**
**28043 Madrid (ES)**

(56) References cited:
**CN-A- 104 196 583     US-B1- 8 418 466**
**US-B1- 8 656 720**

**Description**

**OBJECT OF THE INVENTION**

The present invention belongs to the technical field of the energy transformation and can be used, for example, in the energy industry field.

More particularly, the present invention refers to systems, methods, and apparatuses for converting thermal energy into useful mechanical energy, which have an increased efficiency

**STATE OF THE ART**

Thermodynamic cycles are widely known in the art. (*INSERT page 1A)

The thermodynamic cycles relevant for the present invention are those in which, at least one working stream, is subjected to several consecutive thermodynamic cyclical processes (or steps), by means of which:

i) said working stream, which is initially in liquid state, is heated by an external heat source, and turned into a gas;

ii) next, one first part of the thermal energy acquired by the gas in the previous step, indicated above, is then converted into mechanical energy (while the remaining part of said thermal energy is lost, for example, in the form of heat which is undesirably exchanged with the environment), and

iii) finally, the gas is cooled, returning to its initial state.

The mechanical energy obtained in said thermodynamic cycles can be employed as useful work (as it happens, for example and without being limitative, in steam engines) or, alternatively, converted at a later step into another form of energy, for example, electrical energy (as it happens, for example without being limitative, in power generator plants).

One of said thermodynamic cycles is the Rankine cycle, an idealized thermodynamic cycle, which is similar to the process of power generation actually performed by heat engines in many commercial steam-operated power generator plants.

For instance, the Patent with publication number US 8,418,466 B1 discloses a thermodynamic property amplification of a given thermal supply, provided by hydrocarbon combustion or in the preferred application heat provided by low-grade geothermal energy from the earth, for a vapor power cycle. It discloses a process for generating a motive work by segregating the compressible supercritical energy stream from a heat exchanger into hot and cool fractions using a vortex tube.

The Rankine cycle is usually performed in a closed circuit through which a working stream (usually water), circulates. Said closed circuit usually goes through four main devices: a pump (intended to pressurize the stream), a boiler connected to an external heat source, an expansion device (such as a turbine), and a condenser (i.e., a heat exchanger intended to condense a stream which is initially in gas form)

Broadly speaking, in a Rankine cycle, the working stream undergoes the following successive thermo dynamical processes:

A) the working stream is -initially- at liquid stage and is pumped (by the pump), from a low-pressure value to a high-pressure value (since working at high-pressure values increases the efficiency of the cycle);

B) The high-pressure working stream enters the boiler, where it is heated at a constant pressure by an external heat source until it suffers a phase transformation, at constant temperature, and becomes a dry saturated vapor;

C) The working stream -now in a dry saturated vapor form- enters the expansion device in the form of uniform stationary stream and increases its volume, generating a useful work. In this step, part of the thermal energy acquired by the working stream in the previous process (step B), is therefore converted into mechanical energy. This makes the temperature and pressure of the working stream to decrease; and

D) The working stream -which at this step has turned into a wet vapor form- enters the condenser and suffers another phase transformation, at constant temperature, by means of which it returns to liquid state.

The heat generated by the external source usually comes, without intending to be limitative, from nuclear fission, the combustion of fossil fuels, concentrated solar power or geothermal water.

The efficiency of the Rankine cycle -defined as the ratio between thermal energy supplied by the external heat source, and the mechanical energy obtained at the end of the cycle is usually low, usually between 0,10 and 0,30 (10-30%).

Consequently, in order to improve efficiency, other thermodynamic cycles have been developed, for example the so-called Kalina cycle, which is employed nowadays in some power plants.

In the Kalina cycle, which is a variation of the Rankine cycle, the working stream is a mixture of two different components, usually, water and ammonia.

The use of this working stream in the Kalina cycle makes possible that, even during the phase transformation of said working stream which takes place inside the boiler, (i.e, the final part of step B), mentioned above in connection with the Rankine cycle), the temperature of the working stream increases. Similarly, during the phase transformation which takes place inside the condenser, temperature decreases (Step D mentioned above).

This increases the efficiency of this thermodynamic cycle, since the efficiency of a particular thermodynamic cycle is related with the quotient between the average heat addition ($T_b$) -which takes place, mainly, in the boiler in step B- and the average heat rejection ($T_c$) -which takes place, mainly, in the condenser in step D- available during the thermodynamic cycle.

In fact, the theoretical efficiency ($\eta$) of a particular thermodynamic cycle is as follows:

$$\eta = 1 - \frac{T_c}{T_b}$$

In usual applications $T_b$ is approximately 120-130°C, while $T_c$ is, approximately, 80° C.

The real efficiency of a particular thermodynamic cycle is lower than the theoretical value mentioned above, due to heat losses to the environment.

On the other hand, in the Kalina cycle an additional device, known as "separator" is usually placed between the exit of the expansion device and the condenser. As its name suggest, the separator is intended to separate the spent working stream exiting the expansion device into a lean stream (with low ammonia content, for example, an ammonia content of 30% in weight or less) and a rich stream (with high ammonia content, for example, an ammonia content of 60% in weight or more). The lean stream is carried to the condenser, while the rich stream is returned to the pump by means of additional conduits.

Given that the lean stream has a lower ammonia content, it will condense more easily inside the condenser, since the condensation temperature is in inverse proportion to the ammonia content.

In addition, given that the temperature of the spent working stream leaving the expansion device is higher than the temperature of said stream at the entry of the boiler, consequently, in the Kalina cycle part of the working stream leaving the expansion device is usually redirected, by means of suitable conduits to a particular type of heat exchanger usually known as recuperator, in order to supplementary heat the working stream entering into the boiler.

In order to further improve the efficiency of thermodynamic cycles, other modifications have been also conceived, such as:

- Reducing the pressure at the condenser;
- Superheating the working stream before it enters the expansion device;
- Applying intermediate reheating to the working stream in vapor form, providing its more active expansion in the turbine by dividing the expansion into different sequential steps;
- Applying various modifications of Laval nozzles for acceleration of working stream at inlet of turbine (increase of stream kinetic energy) to improve transformation of heat energy into mechanical energy.

In spite of all these improvements, still it is necessary to develop new systems, methods and apparatus for converting thermal energy into mechanical energy with increased efficiency, as well as to provide devices intended to optimize the efficiency of said systems, methods and apparatus.

Consequently, this invention is intended to address the problems and disadvantages in the state of the art mentioned above

**DEFINITIONS**

Throughout the present document it should be understood that a "wet vapor" is a mixture of formed by saturated liquid and saturated vapor.

Similarly, the term "superheated" stream should be interpreted as a stream gaining a temperature significantly above the temperature of external heat source, for example between 20 and 50°C above the temperature of external heat source, due to features of devices (vortex tubes operating on Ranque- Hilsch effect) described below in detail.

On the other hand, a "pressurized" circuit should be interpreted as a closed circuit through which a stream circulates, said stream having a pressure caused by a phase transformation into vapour form and/or by the action of at least one pump.

A "low boiling stream" should be interpreted as a stream having a boiling temperature below 15 °C at normal atmospheric pressure. Similarly, a "high boiling substance" should be interpreted as a substance having a boiling temperature above 90 °C at normal atmospheric pressure.

A "heat exchanger" should be interpreted as a thermodynamic arrangement through which two different and separated streams, at different temperatures, flow. The heat exchanger is provided with heat transmission means which allow both streams to exchange thermal energy one with another. Nevertheless, said streams do not actually enter into direct physical contact with each other. According to 2nd law of the thermodynamic, in a heat exchanger the stream which has higher temperature is the one that transfers heat to the stream of lower temperature.

According to its intended use, a heat exchanger may be defined as a "heater", if the first stream is forced through the arrangement in order to transfer part of its thermal energy to the second stream (and therefore increasing the temperature of said second stream) or - alternatively- as a "condenser" if the first stream is intended to receive thermal energy from the second stream which is in gaseous form, making this second stream to decrease its temperature enough to suffer a phase transformation into liquid form.

Throughout the present document it should be understood that when a first element is "attached, joined, fixed" to a second element, this means that said first element can be either directly attached, joined or fixed to the second element, or indirectly by means of an intermediary element.

## BRIEF DESCRIPTION OF THE INVENTION

One first object to the present invention refers to a system for converting thermal energy into mechanical energy which comprises:

- at least one boiler connected to an external heat source, said boiler having at least one intake and at least one outlet, the temperature at the outlet being higher than the temperature at the intake;
- a pressurized working circuit, through which a working stream circulates, a first section of said working circuit being connected to an outlet of the boiler and a second section of said working circuit being connected to an intake of said boiler, the working circuit being configured such that the working stream gains thermal energy from the external heat source when it circulates throughout the boiler;
- an expansion device (for example a turbine), located downstream the first section of the working circuit and being configured such that the working stream expands, in the expansion device and converts part of its thermal energy into mechanical energy after which the working stream turns into a spent working stream and leaves the expansion device through the second section of the working circuit;
- a first heater located upstream the expansion device, configured such that the working stream is superheated -gaining additional thermal energy- before entering into the expansion device;

characterized in that it also comprises:

- an auxiliary pressurized circuit, configured for directing an auxiliary stream from an outlet of the boiler to a main inlet of at least one vortex tube;

- at least one vortex tube, -having a main inlet, an accessory inlet, a hot output and a cold output- said vortex tube being configured such that the auxiliary stream is divided into a hot auxiliary stream and a cold auxiliary stream circulating in opposite directions, the temperature of the hot auxiliary stream being higher than the temperature of the cold auxiliary stream;

- a hot auxiliary circuit, through which the hot auxiliary stream circulates, a first end of the hot auxiliary circuit being connected to the hot output of the vortex tube and a second end of the hot auxiliary circuit being connected to the intake of the boiler, the hot auxiliary circuit also passing through the first heater, so at least part of the hot auxiliary stream heats the working stream while passing through the first heater;

- a cold auxiliary circuit, through which the cold auxiliary stream circulates, a first end of the cold auxiliary circuit being connected to the cold output of the vortex tube and a second end of the cold auxiliary circuit being connected to the accessory inlet of a vortex tube, the cold auxiliary circuit passing through a first condenser and/or a second condenser, so at least part of the cold auxiliary stream condensates the spent working stream, said spent working stream also passing through said condensers and having a higher temperature than the cold auxiliary stream.

In the system according to the present invention, the working circuit is independent from the auxiliary circuit. In fact, the working circuit only receives thermal energy from hot auxiliary stream when it passes through the first heater. This thermal interchange contributes to superheat the working stream before it enters the expansion device.

Similarly, the cold auxiliary circuit only receives thermal energy from other stream (the working stream and/or the absorbent stream which will described in further detail below), when it passes through the first condenser and/or the second condenser. This thermal interchange makes possible to condensate the working stream and/or the absorbent stream.

The use of at least one vortex tube in the system according to the present invention makes possible, thanks to the Ranque-Hilsch effect, to obtain a hot auxiliary stream and a cold auxiliary stream having significantly different temperatures.

Consequently, the average heat addition ($T_b$) -which is related with the temperature of the hot auxiliary stream- is higher than in the thermodynamic cycles of the prior art, while the average heat rejection ($T_c$) -which is related with the temperature of the cold auxiliary stream- is lower than in the thermodynamic cycles of the prior art.

More particularly, in the system according to the present invention, departing from a temperature of the external heat source of between + 50°C and + 100°C, the average heat addition ($T_b$) usually is in the range of 70 °C- 80°C (given that, thanks to the vortex tube, the temperature achieved by the hot auxiliary stream, is usually above the temperature of the external heat source), while the average heat rejection $T_c$ usually is in the range of -20 - 30°C. This results in a temperature difference between $T_b$ and $T_c$ which is, usually, close to 100°C, which is significantly bigger than in systems for converting thermal energy according to the prior art (usually in the range of 50-60°C).

This increased temperature difference between $T_b$ and $T_c$ results in an increased efficiency of the thermodynamic cycles that take place in the systems for converting energy according to the present the invention, as compared with regard to the system that form part of the prior art.

The mechanical energy obtained by a system according to the present invention can be employed as useful work (as it happens, for example and without being limitative, in steam engines) or, alternatively, converted at a later step into another form of energy, for example, electrical energy (as it happens, for example without being limitative, in power generator plants).

Thus, in order to convert the mechanical energy generated in the expansion device (which is usually in the form of a torque induced in a rotating shaft) into electrical energy, the expansion device of the system according to the present invention can be connected to an electric generator. In addition, a coupling can be interposed between the rotating shaft of the expansion device and the generator, in order to improve the transmission of the torque to the generator. In addition, a sealed coupling can be interposed between the rotating shaft of the expansion device and the generator, in order to provide full air tightness of the working circuit, to provide possibility of using working low-boiling volatile substances, further reduce the pressure at the outlet of expansion device (to avoid use of compressors - ejectors), improve the efficiency of thermodynamic cycle and ensure effective transmission of torque from pressurized working circuit to generator.

In fact, another object not covered by the present invention, which will be described in further detail below, is directed to one of said couplings, more particularly a precessional vacuum coupling.

The boiler preferably comprises a first inner space through which the auxiliary stream circulates, and a second inner space through which the working stream circulates, the first and second inner spaces being physically separated from each other but being configured such that they can exchange thermal energy with each other. The possibility of heat exchange, between the first inner space and the second inner space, increases the efficiency of the system according to the present invention, since the temperature of the hot auxiliary circuit returning to the boiler usually exceeds the temperature of the external heat source. Consequently, this additional thermal energy may be transferred to the working stream circulating through the second inner space of the boiler.

The cold auxiliary circuit preferably passes through a collector for liquid condensate, which is in contact with a pump. The pump is, in turn, connected to a first end of a liquid condensate circuit and the second end of the liquid condensate circuit is connected to an inlet of the boiler.

In a particular embodiment of the system for converting thermal energy into mechanical energy according to the present invention, the cold auxiliary circuit and the second section of the working circuit pass through the second heat exchanger, so the cold auxiliary stream condensates the spent working stream.

In other embodiment of the present invention, the system for converting thermal energy into mechanical has the following additional technical features:

- it comprises an absorbent circuit, through which a stream of absorbent -having a high boiling temperature (i.e., above 90°C at normal atmospheric pressure)-circulates;
- the hot auxiliary circuit is divided into two different branches:

  i) a first branch of the hot auxiliary circuit passing through the first heater, said first branch being configured such that it superheats the working stream, and
  ii) a second branch of the hot auxiliary stream passing through a second heater, said second branch being configured such that it heats the absorbent stream; and

- the first section of the cold auxiliary circuit is divided into two different branches:

iii) a first branch of the first section of the cold auxiliary circuit passing through the first condenser, said first branch of the first section being configured such that it condenses the spent working stream,
iv) a second branch of the first section of the cold auxiliary circuit passing through the second condenser, said second branch of the first section being configured such that it condenses the absorbent stream.

The embodiment of the present invention, described in the paragraph above, preferably comprises the following additional technical features:

- the first section of the absorbent circuit is connected, by one first end to a separator, and is connected by a second end to a mixer, the absorbent mixing inside the mixer with at least part of the cold auxiliary stream;

- the second section of the absorbent circuit, is connected by one first end to the mixer, and is connected by a second end to a cavitation device, and

- the cavitation device is connected to a first return conduit in contact with an inlet of the boiler, the cavitation device being also connected to a lean stream conduit which passes through a third heater and ends in the separator.

In addition, the separator is preferably connected to a second return conduit in contact with an inlet of the boiler, the separator also being preferably in contact with the second condenser.

In another embodiment of the present invention, the system for converting thermal energy into mechanical has the following additional technical features:

- it comprises an absorbent circuit, through which a stream of absorbent -having a high boiling temperature- circulates;

- the hot auxiliary circuit is divided into two different branches:

     a) a first branch of the hot auxiliary circuit passes through the first heater, where it superheats the working stream, the first branch of the hot auxiliary circuit also passing through the second heater, said first branch being configured such that it heats the absorbent stream;

     b) a second branch of the hot auxiliary circuit passes through a third heater, said second branch being configured such that it heats the absorbent stream;

- the cold auxiliary circuit passes through the second condenser, said cold auxiliary circuit being configured such that it condensates the absorbent stream.

Preferably, in the embodiment of the present invention described in the paragraph above:

- the first section of the absorbent circuit is connected, by one first end to a separator and is connected by a second end to the cavity of the hollow shaft of the expansion device, the first section of the absorbent circuit being configured such that the absorbent stream mixes inside the said cavity with the spent working stream;

- the second section of the absorbent circuit, is connected by one first end to a pump which is in contact with the cavity of the hollow shaft of the expansion device, the second section of the absorbent circuit being connected by a second end to a cavitation device, and

- the cavitation device is connected to a first return conduit in contact with an inlet of the boiler, the cavitation device being also connected to a lean stream conduit which passes through a third heater and ends in the separator.

Another object of the present invention, which will be described in further detail below, is directed to vortex tubes for systems for converting thermal energy into mechanical energy.
More particularly, this object of the present invention refers to a vortex tube for systems for converting thermal energy into mechanical energy, which comprises:

- a hollow body axially elongated;

- a main inlet connected to a swirl chamber communicated with the interior of the elongated hollow body, the main inlet being configured for injecting tangentially into the swirl chamber a pressurized stream, such that the pressurized stream accelerates inside the elongated body creating a vortex of pressurized stream;

- a hot output, neighboring a throttle body defining an axially peripheral annular nozzle, the annular nozzle being disposed inside the elongated body at one first end of said hollow body, and being configured such that the annular nozzle only allows the axially peripheral part of the vortex pressurized stream to leave through the hot output;

- a cold output, located at an axially central part of the second end of the hollow body, the cold output being configured such that only the axially central part of the vortex pressurized stream is allowed to leave through the cold output;

The vortex tube being characterized in that it also comprises an auxiliary inlet, one end of said auxiliary inlet being disposed at axially central position inside the hollow body neighboring the first end of said hollow body and axially opposed to the cold output.

The surface of the throttle body which is closer to the cold output can optionally have the shape of a concave cup.

Alternatively, in another embodiment of the vortex tube according to the present invention, the surface of the throttle body which is closer to the cold output has a conical shape.

In some embodiments of the present invention, the auxiliary inlet is provided with a second swirl chamber positioned inside throttle body. This particular arrangement allows the incoming cold auxiliary flow to make an axial counter directional vortex inside peripheral vortex that increase magnitude of heat exchange between peripheral and axial flows.

The use of any of the abovementioned vortex tubes in any of the systems for converting thermal energy into mechanical energy described above, is also another object of the present invention.

More particularly, the present invention also comprises the use of at least one vortex tube in any of the systems for converting thermal energy into mechanical described above, said vortex tube comprising:

- a hollow body axially elongated;

- a main inlet connected to a swirl chamber communicated with the interior of the elongated hollow body, the main inlet being configured for injecting tangentially into the swirl chamber a pressurized stream, such that the pressurized stream accelerates inside the hollow body creating a vortex of pressurized stream;

- a hot output, neighboring a throttle body defining axially peripheral annular nozzle, the annular nozzle being disposed inside the hollow body at one first end of said elongated hollow body, and being configured such that the annular nozzle only allows the axially peripheral part of the vortex pressurized stream to leave through the hot output;

- a cold output, located at an axially central part of the second end of the elongated hollow body, the cold output (II) being configured such that only the axially central part of the vortex pressurized stream is allowed to leave through the cold output;

the vortex tube being characterized in that it also comprises an auxiliary inlet, one end of said auxiliary inlet being disposed at axially central position inside the elongated body neighboring the first end of said elongated body and axially opposed to the cold output.

Another object not covered by the present invention, which will be described in further detail below, is directed to a turbine for systems for converting thermal energy into mechanical energy, which comprises:

- a hollow shaft having an internal cavity, one first end of the internal cavity being in contact with a plurality of inlet ducts and a second end of the internal cavity being in contact with a plurality of outlet ducts;

- a rotor drum comprising a plurality of inclined nozzles on the periphery of the rotor and plurality of discs disposed inside the rotor underneath inclined nozzles; said discs being disposed in parallel to each other defining a plurality of inter-disc spaces, said discs being also perpendicularly joined to the hollow shaft and being arranged such that the inter-disc spaces are in contact with the inlet ducts;

characterized in that the turbine also comprises pulse generators, the pulse generators being arranged for injecting a working stream through the nozzles, in such a way that the working stream expands creating waves acting on the inclined nozzles, creating torque on the rotor drum and subsequently flowing through the inter-disc spaces, entering into the internal cavity of the hollow shaft through the inlet ducts and leaving the internal cavity of the hollow shaft through the outlet ducts.

In contrast to conventional expansion devices, in the turbine of this disclosure the working stream expands outside the abovementioned turbine rotor and therefore converts most of its thermal energy into mechanical energy after which the working stream penetrate inter-disc spaces and due to friction forces turns into a spent working stream and leaves the turbine through the outlet ducts.

The turbine of this disclosure is a blade-free turbine in which pulse generators and inclined movable nozzles-are used. This particular arrangement makes the working stream, which is usually in gas form and at a high temperature (usually above 100°C), to be abruptly transformed through pulse generators into several non-stationary pulse cold streams accompanied by waves that create a torque at the periphery of the rotor (in inclined nozzles of the rotor), rotor disks of the blade-free turbine, converting the maximum part of its thermal energy obtained from an external heat source and a hot auxiliary stream into mechanical energy. As a result of operation of pulse generators, the working stream sharply expands reducing its temperature and pressure, converting its thermal energy into kinetic energy of shock waves and into residual kinetic energy of cold non-stationary working stream. The main part of obtained kinetic energy is utilized and transformed into mechanical energy by peripheral devices of the rotor. The residual kinetic energy is utilized and transformed into mechanical energy by the inter-disc spaces of the rotor. By such transformations the working stream becomes a spent working stream. Thus, having done useful work, the spent working stream comes from the inter-disk spaces of the turbine rotor into the hollow shaft, and then exits the shaft cavity through the outlet ducts.

The advantage of this example using the principle of operation of blade-free turbine coupled with pulse generators is that it uses the utilization of kinetic energy of multiple pulses (shock waves), collectively creating a non-stationary pulse stream. At the same time, thermal energy loss in such turbine is minimal, since the temperature of working stream decreases sharply and since the thermal energy of working stream is maximally transformed into the kinetic energy of pulse stream prior to kinetic action on the rotor of blade-free turbine. The rotor of such a blade-free turbine operates in a cold mode.

In the turbine not covered by the present invention, the outlet ducts are preferably connected to a centrifugal Tesla pump. More preferably, the centrifugal Tesla pump is provided with a shaft which is joined together to the hollow shaft of the turbine.

In a further example, said turbine is also provided with a conduit for high boiling absorbent (i.e., an absorbent having a boiling temperature above 90 °C at normal atmospheric pressure) which partially passes inside the hollow shaft of the turbine.

In the turbine not covered by the present invention, at least one each pulse generator preferably comprises:

- a casing, having at least one internal hollow space;
- a plunger attached to push means and attached to a valve plug, the push means being arranged to move between a first position which said means do not interact with a return spring and, a second position in which said means pushes the return spring and the valve plug being arranged to move between a first position in which it hermetically isolates the internal hollow space from an output orifice, and a second position in which the internal hollow space is communicated with the output orifice;
- at least one faucet arranged to shift periodically between an open position in which it allows the flow of a working stream through at least one intake line, and a closed position in which it impedes the flow of the working stream;
- at least one intake line connected to the internal hollow space;

characterized in that it also comprises:

- a triggering chamber connected to at least one intake line;
- a rod attached to the valve plug and arranged to move together with the valve plug between a first position in which the volume of the triggering chamber is maximum, and a second position in which part of the rod is introduced inside the triggering chamber reducing the volume thereof;
- a triggering outlet line disposed between the triggering chamber and the output orifice; and
- a triggering valve disposed in the outlet line arranged to trigger the movement of the rod inside triggering chamber and simultaneously initiate movement of the valve plug, the plunger and the piston towards the return spring.

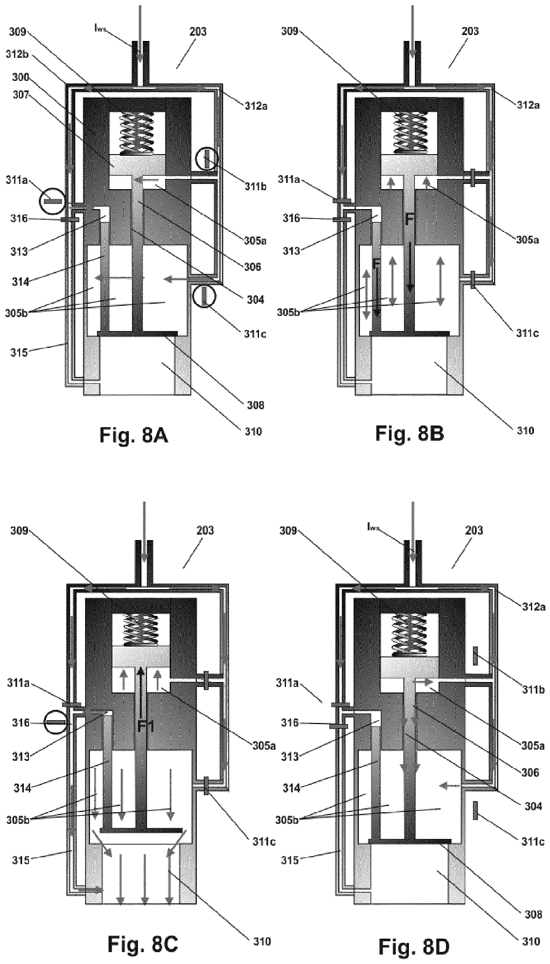

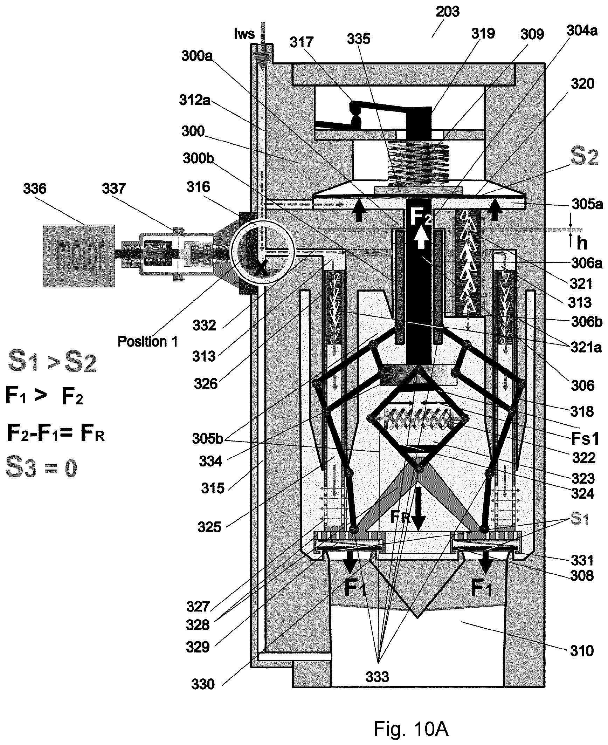

The operation of pulse generators is described in further detail below, with regard with Figs. 8A to 8D and Figs. 10A to 10C.

In one example of the pulse generators of the turbine not covered by the present invention, the push means is a piston.

Alternatively, in other example of the pulse generators of the turbine not covered by the present invention, the push means is a flexible membrane, arranged to bend when subject to a pressure above a certain predetermined value.

In a further example of the turbine the pulse generator comprises push means in the form of a flexible membrane, as well as the following technical features:

- the triggering valve is provided with a contact, the contact being arranged to move between a first position, in which the triggering valve allows the flow of working stream into the triggering chamber and a second position, in which the triggering valve impedes the flow of working stream into the triggering chamber; and wherein the movement of the contact from the first position to the second position is caused by the bending of the flexible membrane;

- the plunger is attached to the valve plug by means of a hollow cylinder attached to a parallelogram comprising a parallelogrammic mechanism and a plurality of levers pivotally connected to each other by means of swivel joints; the parallelogram being arranged such that when the valve plug moves between its first position and second position, the parallelogram, the hollow cylinder and the plunger move as a whole structure the direction of membrane to a ledge; and

- The internal hollow space is divided into two different regions separated by a ledge arranged to prevent the axial movement of the hollow cylinder from the first region into the second region.

The use of the parallelogram and the parallelogrammic mechanism increases the speed of movement of the plug from the seat (the speed of opening a large annular orifice) up to a value which exceeds the speed of deformation of the center of the flexible membrane (-the speed of free expansion of working medium under given pressure), which is deformed under the influence of constant pressure of the working medium permanently supplied from the source.

In another example the pulse generator comprises all the technical features mentioned immediately above as well as:

- at least two different triggering chambers; and

- at least two different hollow rods attached to the valve plug, each of the hollow rods being associated to a respective triggering chamber and arranged to move together with the valve plug between a first position in which the volume of the respective triggering chamber is maximum, and a second position in which part of the hollow rod is introduced inside the respective triggering chamber reducing the volume thereof.

In another example, the pulse generator comprises all the technical features mentioned immediately above as well as the following:

- the valve plug includes a ring-shaped holder which is connected to the parallelogram, and to the arms of the parallelogram mechanism through swivel or flexible joints, the holder being also mechanically connected to the hollow rods; and

- valvular conduits are rigidly mounted inside each hollow rod, configured so that a free direction of each valvular conduit is directed from the triggering chambers to the second region of the internal hollow space.

As in the previous example, the use of the parallelogram and the parallelogrammic mechanism increases the speed of movement of the plug from the seat. On the other hand, the valvular conduits mounted inside the hollow rods allow to quickly repeat the charge-discharge cycles, and to remove the plug from the seat during the triggering phase.

Finally, the arrangement of the ring-shaped holder, described above, additionally increases the speed of charge-discharge cycles.

The use of any of the abovementioned turbines in any of the systems for converting thermal energy into mechanical energy described above is also another object not covered by the present invention.

Another example also comprises the use of a turbine in any of the systems for converting thermal energy into mechanical described above, wherein said turbine comprises:

- a hollow shaft having an internal cavity, one first end of the internal cavity being in contact with a plurality of inlet ducts and a second end of the internal cavity being in contact with a plurality of outlet ducts;

- a rotor drum comprising a plurality of inclined nozzles disposed on a periphery of rotor, and a plurality of discs disposed inside the rotor underneath the inclined nozzles, said discs being disposed in parallel to each other defining a plurality of inter-disc spaces, said discs being also perpendicularly joined to the hollow shaft and being arranged such that the inter-disc spaces are in contact with the inlet ducts;

characterized in that the turbine also comprises pulse generators arranged for injecting a working stream through the nozzles, in such a way that the working stream expands creating waves acting on the inclined nozzles, creating torque on the rotor drum and subsequently flowing through the inter-disc spaces, entering into the internal cavity of the hollow shaft through the inlet ducts and leaving the internal cavity of the hollow shaft through the outlet ducts.

Finally, another example, which will be described in further detail below, is directed to a precessional vacuum coupling for a system for converting energy, said system for converting energy comprising an expansion device with a rotating shaft and an electric generator provided with a driven shaft, the coupling comprising:

- a first housing halve provided with a through hole and a hollow internal space, the through hole being arranged to house the rotating shaft of the expansion device;
- a second housing halve provided with a through hole and a hollow internal space, the through hole being arranged to house the driven shaft of the electric generator, and the second housing halve being releasably joinable to the first housing halve, so the through hole of the first housing halve is aligned with the through hole of the first housing halve;
- a first crankshaft connected to a free end of the rotating shaft of the expansion device;
- a second crankshaft connected to a free end of driven shaft of the electric generator, the second crankshaft being releasably joinable to the first crankshaft, so the first crankshaft and the second crankshaft share a common axis;

the coupling being characterized in that it also comprises:

- a first vacuum disk releasably mountable on the first crankshaft;
- a second vacuum disk releasably mountable on the second crankshaft;
- a sealing flexible membrane interposed between the first vacuum disk and the second vacuum disk, the membrane being arranged such that it isolates the hollow internal space of the first housing halve from the hollow internal space of the second housing halve; and
- at least one vacuum channel extending between a source of negative pressure and the sealing flexible membrane.

As already anticipated, the precessional vacuum coupling of the invention is mainly intended to optimize the torque transmission of the rotating shaft of the expansion device, to the driven shaft of an electric generator. Said coupling also provides full air tightness to the working circuit of the system for converting thermal energy, which allows the possibility of using working low-boiling volatile substances. It further reduces the pressure at the outlet of expansion device (to avoid use of compressors - ejectors), improves the efficiency of thermodynamic cycle and ensures effective transmission of torque from pressurized working circuit to generator.

The source of negative pressure creates a vacuum in the periphery of the sealing flexible membrane which induces a bonding of the first vacuum disk with the second vacuum disk and the sealing flexible membrane, thereby providing an accurate and rigid connection of said parts. In addition, said vacuum bonding prevents the rotating shaft and the driven shaft from performing radial, angular or axial movements relative to each other and relative to the sealing flexible membrane.

The through hole of the first housing halve and the second housing halve are preferably provided with bearings. Similarly, the first crankshaft and the second crankshaft are preferably provided with bearings.

In a particular example, the tip of the first crankshaft is provided with a conical feather, while the tip of the second crankshaft is provided with a conical cavity.

In the present description, "tip of the first/second crankshaft" or is that part of the first/second crankshaft which is closer to the flexible sealing membrane.

In an alternative example, each face of the flexible sealing membrane is provided with a conical feather, while the tip of the first crankshaft and the tip of the second crankshaft are provided with a conical cavity. This particular example improves the accurate positioning of the centers of the vacuum annular disks and of the rotating shaft and the driven shaft, which are disposed on opposite sides of the flexible sealing membrane.

Other characteristics and advantages of this invention will arise from the following detailed description of the non-limiting embodiments, which illustrate the objects thereof, in relation to the accompanying figures.

## DESCRIPTION OF THE FIGURES

Fig. 1 is a schematic view that illustrates a first possible embodiment of a system for converting thermal energy into mechanical energy;
Fig. 2 is a schematic view that illustrates a second possible embodiment of a system for converting thermal energy into mechanical energy;
Fig. 3 is a schematic view that illustrates a third possible embodiment of a system for converting thermal energy into mechanical energy;
Fig. 4 is a schematic view that illustrates a fourth possible embodiment of a system for converting thermal energy into mechanical energy;
Fig. 5 is a schematic view that illustrates a fifth possible embodiment of a system for converting thermal energy into mechanical energy;
Figs. 6A and 6B are cross section views, each of them illustrating a possible embodiment of a vortex tube used in

## EP 4 212 771 B1

a system for converting thermal energy into mechanical energy;

Fig. 7A is a cross section schematic view, illustrating a first possible example of turbine used in a system for converting thermal energy into mechanical energy;

Fig. 7B is a cross section schematic view, illustrating a second example of turbine used in a system for converting thermal energy into mechanical energy;

Fig. 7C is a partially exploded perspective view, at an enlarged scale, of a detail of the turbine shown in Fig. 7A;

Fig. 7D is a cross section schematic view, at an enlarged scale, of a detail of the turbine shown in Fig. 7A;

Figs. 8A to 8D are cross section schematic views of a first example of a pulse generator of a turbine not covered by the present invention and show the operation of said pulse generator;

Fig. 9 is a cross section schematic view of a second example of a pulse generator of a turbine not covered by the present invention;

Fig. 10A is a cross section schematic view of a pulse generator similar to the one shown in Fig. 9, in a closed charging state;

Fig. 10B is a cross section schematic view the pulse generator of Fig. 10 A, in an initiation state;

Fig. 10C is a cross section schematic view the pulse generator of Fig. 10 A, in a discharging state;

Fig. 11A is a cross section exploded view of a first embodiment of a precessional vacuum coupling not covered by the present invention;

Fig. 11B is a cross section view of the precessional vacuum coupling of Fig. 11A with all its elements duly mounted;

Fig. 11C is a cross section exploded view of a second embodiment of a precessional vacuum coupling not covered by the present invention; and

Fig. 11D is a cross section view of the precessional vacuum coupling of Fig. 11C with all its elements duly mounted.


## NUMERICAL REFERENCES

A list of the different elements that form part of the present invention and examples not covered by the invention and are represented in the figures, as well as the corresponding numerical references that have been designated to them, is provided below:

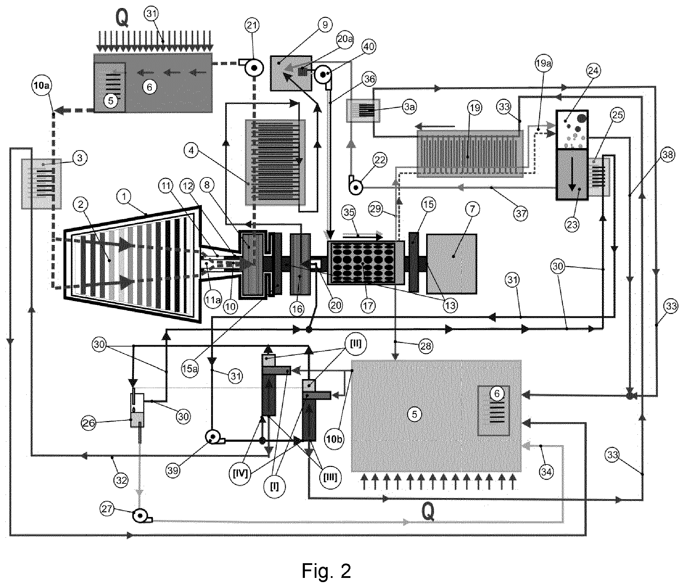

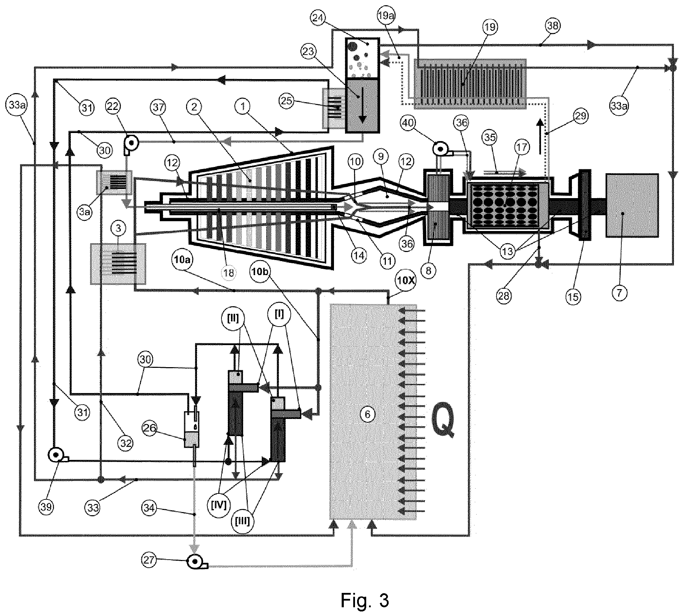

(1)       Housing of the expansion device and Tesla disc pump;
(2)       Expansion device;
(3)       First heater;
(3a)      Second heater;
(4)       First condenser;
(5)       First inner space of the boiler (for the auxiliary stream);
(6)       Second inner space of the boiler (for the working stream);
(7)       Electric generator;
(8)       First Tesla disc pump;
(9)       Cavity / mixer of the hollow shaft of the turbine;
(10)      Second section of the working circuit;
(10a)     First section of the working circuit;
(10b)     Auxiliary circuit;
(10c)     Additional section of the working circuit;
(11)      Holes of the hollow shaft of the expansion device;
(12)      Hollow shaft of the expansion device;
(13)      Driven shaft of the electric generator;
(14)      Absorbent nozzle in mixer /cavity 9 of hollow shaft, Fig.2 (C);
(15)      Sealed coupling for connecting the shaft of the cavitation device, to the shaft of the electric generator;
(15a)     Sealed coupling for connecting the shaft of the expansion device, to the shaft of the cavitation device
(16)      Second Tesla disc pump;
(17)      Cavitation device;
(19)      Third heater;
(20)      Hollow portion of second Tesla disc pump;
(20a)     Absorbent nozzle in static mixer 9, Fig.3 (C);
(21)      Pump for returning the spent working stream to the boiler;
(22)      Pressure pump for pumping the absorbent;
(23)      Absorbent in liquid form;
(24)      Separator;
(25)      Second condenser;

(26)     Collector for liquid condensate;
(27)     Pump for returning the liquid condensate to the boiler;
(28)     First return conduit;
(29)     Lean stream conduit;
(30)     First section of the cold auxiliary circuit;
(31)     Second section of the cold auxiliary circuit;
(32)     First branch of the hot auxiliary circuit;
(33)     Second branch of the hot auxiliary circuit;
(34)     Liquid condensate circuit;
(35)     Cavitation stream;
(36)     Second section of the absorbent stream circuit;
(37)     First section of the absorbent stream circuit;
(38)     Second return conduit;
(39)     Pump for returning the cold auxiliary stream to the vortex tubes;
(40)     Pump for directing the rich stream to the cavitation device;
(Q)      External heat source;
(100)    Hollow body of the vortex tube;
(110)    Swirl chamber of the vortex tube;
(111)    Internal cavity of the hollow body of the vortex tube;
(113)    Axially central part of the vortex of pressurized stream;
(114)    Axially peripheral part of the vortex of pressurized stream;
(117)    Edge of the surface of throttle body which is closer to the cold output;
(118)    Conduit;
(119)    Surface of throttle body which is closer to the cold output (cup shaped);
(119a)   Surface of throttle body which is closer to the cold output (conical);
(119b)   Tip of the conical surface of throttle body;
(120)    Second swirl chamber provided in the accessory inlet;
(130)    Pressurized stream entering into the vortex tube;
(140)    Axially peripheral annular nozzle;
(160)    Throttle body;
(I)      Main inlet of the vortex tube;
(II)     Cold output of the vortex tube;
(III)    Hot output of the vortex tube;
(IV)     Accessory inlet of the vortex tube;
(201)    Housing of the turbine;
(202)    Rotor drum of the turbine;
(203)    Pulse generators of the turbine;
(208)    Conical nozzles of the rotor drum;
(210)    Bearings;
(216)    Internal surface of the housing;
(222)    Spaces between discs;
(223)    Discs of the rotor drum;
(224)    Hollow shaft;
(226)    Conduit for high boiling absorbent;
(227)    Tesla centrifugal pump of the turbine;
(238)    Shaft of the Tesla centrifugal pump;
(240)    Auxiliary compressor;
(245)    Motor of the auxiliary compressor;
(246)    Inlet ducts;
(246a)   Outlet ducts;
(250)    Battery;
(260)    Control panel;
(270)    Path of the flow of the working stream;
(280)    Direction of the torque experimented by the discs and the hollow shaft;
(300)    Casing (of the pulse generator);
(300a)   Ledge;
(300b)   Clearance between the casing and the hollow cylinder 306a;
(304)    Clearance (of the pulse generator);

(304a)   Clearance between the plunger 306 and the casing 300;

(305a)   1st region of the internal hollow space (of the pulse generator);

(305b)   2nd region of the Internal hollow space (of the pulse generator);

(306)    Plunger (of the pulse generator);

(306a)   Hollow cylinder;

(306b)   Clearance between the plunger and the hollow cylinder;

(307)    Piston (of the pulse generator);

(308)    Valve plug (of the pulse generator);

(309)    Return spring (of the pulse generator);

(310)    Output orifice (of the pulse generator);

(311a)   1st faucet (of the pulse generator);

(311b)   2nd faucet (of the pulse generator);

(311c)   3rd faucet (of the pulse generator);

(312a)   1st intake line (of the pulse generator);

(312b)   2nd intake line (of the pulse generator);

(313)    Triggering chamber (of the pulse generator);

(314)    Rod (of the pulse generator);

(315)    Triggering outlet line (of the pulse generator);

(316)    Triggering valve (of the pulse generator);

(317)    Contact;

(318)    Parallelogrammic mechanism (of the pulse generator);

(319)    Finger (of the pulse generator);

(320)    Flexible membrane;

(321)    Valvular conduit;

(321a)   Movable valvular conduit;

(322)    Spring of parallelogram;

(323)    Parallelogram;

(324)    Parallelogram stopper;

(325)    Hollow rod;

(326)    Clearance between the pulse generator housing and the hollow rod;

(327)    Through hole;

(328)    Annular cover holder of the pulse generator;

(329)    Pulse generator cover spring;

(330)    Annular seat of pulse generator;

(331)    Pulse generator cover puller;

(332)    Annular triggering channel;

(333)    Swivel or flexible joints;

(334)    Plunger protusion;

(335)    Return spring Pad;

(336)    Motor of triggering valve;

(337)    Vacuum coupling of triggering valve;

(350)    Precessional vacuum coupling;

(355a)   First housing halve (of the precessional vacuum coupling);

(355b)   Second housing halve (of the precessional vacuum coupling);

(357)    Bearings (of the first and second housing halves);

(360a)   Hollow internal space (of the first housing of the vacuum coupling);

(360b)   Hollow internal space (of the second housing of the vacuum coupling);

(365a)   First crankshaft (of the precessional vacuum coupling);

(365b)   Second crankshaft (of the precessional vacuum coupling);

(367)    Bearings (of the first and second crankshafts);

(370a)   First vacuum disk (of the precessional vacuum coupling);

(370b)   Second vacuum disk (of the precessional vacuum coupling);

(375)    Sealing flexible membrane;

(377)    Vacuum Bonging area;

(380)    Vacuum channel;

(383)    Non return valve of the Vacuum Channel;

(385a)   First hollow precessing rod (of the first crankshaft);

(385b)   Second hollow precessing rod (of the second crankshaft);

(387)    Strengthening rings;
(390)    Common axis (of the first and second crankshafts);
(395)    Conical feather;
(397)    Conical cavity;
(399)    Grooves for the strengthening rings;
($I_{ws}$)    Intake of the working stream;
($C_{ws}$)    Circulation of the working stream through the cavity of the hollow shaft;
($O_{ws}$)    Outlet of the (spent) working stream.

## DETAILED DESCRIPTION OF THE INVENTION

Throughout the present invention, as well as in the figures, the elements with equal or similar functions will be designated with the same numerical references.

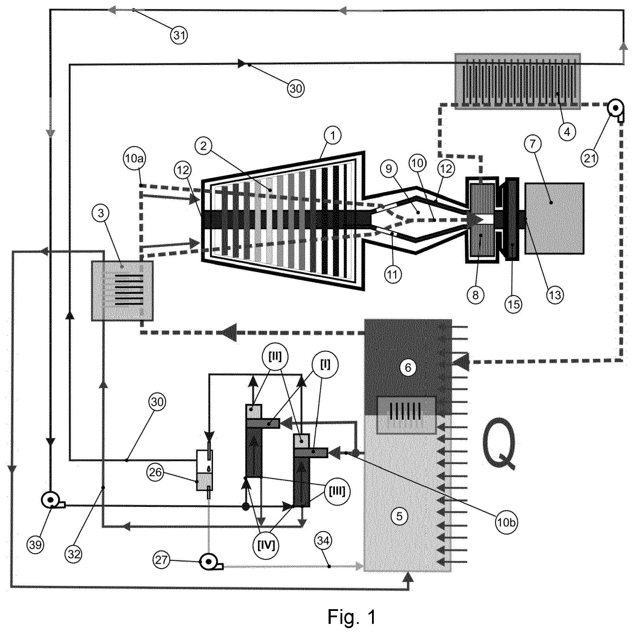

Fig. 1 shows a first embodiment of a system for converting thermal energy into mechanical energy according to the present invention. The figure schematically shows a conventional turbine 2 equipped with blades, not equipped with pulse generators.

Nevertheless, according to examples not covered by the invention, a turbine equipped with pulse generators without blades is used. Instead blades there are conical inclined nozzles applied (being an integral part of blade free turbine rotor) designed for creation of torque of rotor due to ability to absorb most of kinetic energy of repetitive shock waves and ability to pass working medium through - towards spaced discs. Said turbine is in some aspects similar to the Tesla centrifugal disk turbine equipped with a peripheral device capable of utilizing the energy of pulses and shock waves. This turbine has many inclined nozzles and spaced disks that are mounted directly on the hollow shaft so that the spent working stream comes from inter-disc spaces of the turbine 2 directly into the cavity 9 of the hollow shaft.

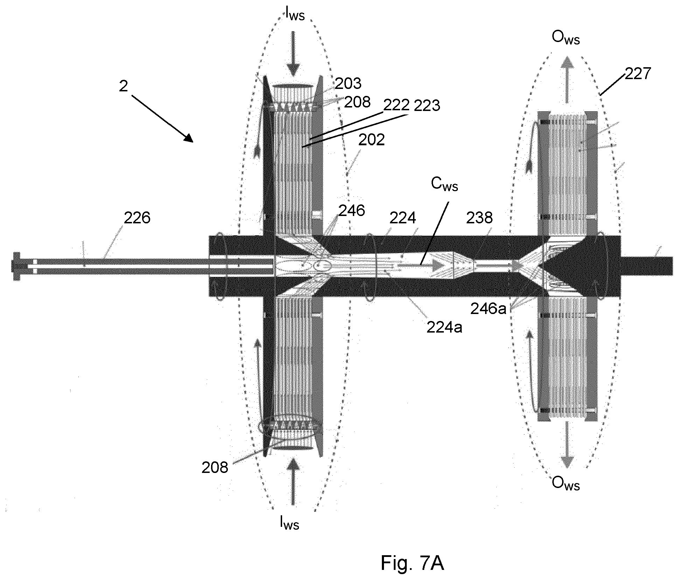

Such a turbine and pulse generators are described in detail below with reference to Figs 7A to 7D.

The particular system shown in Fig. 1 comprises a working circuit 10, 10a and an auxiliary circuit 10b separated from each other, and isolated from the external environment.

A low boiling working stream, which can be either a single a low boiling substance or alternatively, a mixture of several low boiling substances, circulates through the working circuit 10, 10a and 10c. Similarly, a low boiling auxiliary stream, which can be either a single a low boiling substance or alternatively, a mixture of several low boiling substances, circulates through the auxiliary circuit 10b. In this particular embodiment of the invention, the working stream has a higher boiling point than the auxiliary stream.

One first end of the working circuit 10, 10a is in contact with the outlet of a boiler 5, 6, while a second end of the working circuit 10c is in contact with the intake of said boiler 5, 6. The boiler 5, 6 receives heat from an external heat source Q. The heat generated by the external source Q could come, for example and without intending to be limitative, from nuclear fission, the combustion of fossil fuels, concentrated solar power, exothermic chemical reactions or geothermal water.

Consequently, the working stream gains thermal energy (coming from the external source Q), while it circulates inside the boiler, until it leaves through an outlet of said boiler 5,6.

After leaving the boiler through the outlet 6, the working stream moves forward through a first section 10a of the working circuit 10, 10a, passing through a first heater 3. There it, receives additional thermal energy from an auxiliary hot stream, which will be described in further detail below. Next, the superheated working stream enters into an expansion device 2 which, in this particular embodiment of the invention is in the form of conventional turbine equipped with blades.

Once inside the turbine 2, the superheated stationary working stream due to its high thermal and kinetic energy acts on the turbine rotor and creates a torque of the hollow shaft 12, converting part of its thermal energy obtained from the external heat source Q and the hot auxiliary stream into mechanical energy. In this example the turbine shaft is hollow only in the cavity 9. Having done useful work, the spent working stream 10 comes from the space of the turbine rotor into the cavity 9 of the hollow shaft 12 through the holes 11. As a result of useful work in the turbine, the working stream reduces its temperature and pressure and becomes a spent working stream, leaving the cavity 9 through the disc pump 8.

In this particular example, pump 8 is a first centrifugal Tesla disc pump comprising a plurality of spaced apart discs, which are fixed directly on the hollow shaft 12, so that the spent working stream enters the pump 8 inter discs spaces directly from the cavity 9 of the hollow shaft 12.

The discs of the first Tesla pump 8 rotate together with the shaft 12 producing vacuum in the hollow portion 9 of the shaft and at the bottom of turbine rotor space, also creating pressure of the spent working stream on the periphery of the discs and the outlet of the pump. This minimizes the energy consumed by said Tesla disc pump 8.

In this example, the turbine 2 and the disc pump 8 have a common housing 1 which is sealed by a precession vacuum coupling 15, which ensures the leak tightness of the working circuit and provides and hermetically sealed output for the shaft 12.

In this example the rotating hollow shaft 12 of the turbine 2 is connected through the precession vacuum coupling 15 to driven the shaft 13 of an electric generator 7. Said electric generator 7 is already known in the art and, therefore, it will not be described in detail herein.

After leaving the turbine 2, the spent working stream usually remains in a gaseous state although its temperature is close to the point of condensation.

In this particular embodiment of the invention the spent working stream then circulates through a second section 10 of the working circuit 10, 10a which passes through a first condenser 4, where it transfers part of its thermal energy from to an auxiliary cold stream, which has a lower temperature and that will be described in further detail below. Consequently, the spent working stream is finally condensed and subsequently directed to an intake of the boiler 5, 6 by the pump 21 through the circuit 10c.

Once back in the boiler 6 the spent working stream gains thermal energy and returns to its initial state. Then it leaves the second inner zone 6 of the boiler through an outlet, circulating again through the working circuit 10, 10a and 10c.

On the other hand, in this embodiment of the invention, an auxiliary stream circulates through the auxiliary conduit 10b from the output of the boiler 5, 6, to the main inlet I of two vortex tubes. Each vortex tube also has an accessory inlet IV, a hot output III and a cold output II and is configured such that the auxiliary stream is divided, due to the Ranque -Hilsch Effect, into a hot auxiliary stream and a cold auxiliary stream circulating in opposite directions.

The hot auxiliary stream has a temperature which is higher than the temperature of the external heat source Q, and that is even higher than the temperature of the working stream, since -as already anticipated- the auxiliary stream has a boiling point which is lower than the boiling point of the working stream. In turn, the cold auxiliary stream has a temperature which is lower than the temperature of the spent working stream.

Depending on the properties of the substances used in the working stream and in the auxiliary stream, as well as on the methods of generating the pressure of the auxiliary stream at the inlet to the vortex pipes and also methods and the mode of operation of expanding device, the hot auxiliary flow can have a temperature higher than the temperature of the working stream in approximate range from 20 °C to 50 °C, and the cold auxiliary stream which temperature also depends on the pump 39 performance, can have a temperature lower than the temperature of the spent working stream in approximate range from 15 °C to 30 °C.

The lower the boiling point of the auxiliary stream relatively to the working stream, the higher the temperature of the hot auxiliary stream and the lower the temperature of the cold auxiliary stream. An important condition for obtaining the temperature difference is the pressure value under which the auxiliary stream enters the vortex tube. The properties and composition of the auxiliary stream must be selected in such a way as to the properties and composition of the working flow, so that the cold auxiliary stream provides complete condensation of the working stream, and the hot auxiliary stream ensures the overall high-efficiency operation of the thermodynamic cycle.

For example, for ammonia (as a possible working stream substance), the auxiliary stream should be composed of low-boiling substances that, at an external source temperature of +50 °C +70 °C, could generate an auxiliary stream pressure (without application of compressors) of at least 10 Bar at the inlet to the vortex tube and create a negative temperature below -50 °C at the outlet of the vortex tube at a temperature of the spent working stream (ammonia) not higher than minus 35 °C -40 °C, while the temperature of the spent stream depends on the technical parameters of the expansion device. This composition can be either one substance (for example, the same ammonia) or a mixture of several refrigerant substances.

As an alternative to ammonia, a composition of substances able to generate a pressure of about 15-35 Bar at a temperature of +50 °C +70 °C at the input to the expansion device (or pulse generators in the most preferred embodiment) can be used as a working stream substance, and at the output its temperature will be about -20 °C -40 °C (depending on the technical parameters of the expansion device). In this case, ammonia or other substance can be used as an auxiliary stream substance, which at an external source temperature of +50 °C +70 °C could generate a pressure of 15-27 bar at the inlet to the vortex tube and create a negative temperature of the cold auxiliary stream below -50 °C, and also generate in the vortex tube a positive temperature of the hot auxiliary stream of at least +110°C.

Alternatively, atmospheric air or other gases (e.g. nitrogen) boiling at very low temperatures can be used as an auxiliary stream composition. But such gases at an external heat source temperature of +50 °C /+70 °C will not provide a pressure of about 10 Bar neither in the boiler nor at the inlet to the vortex tube. Therefore, when using such gases and their mixtures as an auxiliary stream, a screw compressor is used, which is installed in the auxiliary circuit (operating from the energy obtained at the turbine) to provide the necessary pressure of the auxiliary stream at the inlet to the vortex tube. The air mixture used as an auxiliary stream under pressure at the inlet to the vortex tube in this case will allow to obtain a negative temperature at the outlet of the vortex tube not higher than -50 °C and a positive temperature at the outlet of the vortex tube not less than +110 °C, with the guaranteed provision of the required flow rate by such a compressor at consumption of such a compressor not more than 20-30% of the mechanical energy produced by the expansion device (turbine).

The hot auxiliary stream comes out through the hot output III of the vortex tubes and circulates through a hot auxiliary circuit 32 which passes through the first heater 3. There, given that the temperature of the hot auxiliary stream is higher than the temperature of the working stream, the hot auxiliary stream transfers thermal energy to the working stream. Then, the hot auxiliary stream returns to the boiler 5, 6 through the hot auxiliary circuit 32 returning to its initial state. The temperature of the hot auxiliary stream usually is higher than the temperature of the external heat source Q.

The cold auxiliary stream comes out through the cold output II of the vortex tubes and circulates through a cold auxiliary circuit 30, 31 passing, in this embodiment of the invention, through a collector 26 for liquid condensate. The liquid condensate collected by said collector 26 is returned to the boiler 5, 6, by means of a pump 27 which pumps said liquid condensate through a liquid condensate circuit 34.

The remaining part of the cold auxiliary stream leaves the collector 26 through the first section 30 of the cold auxiliary circuit which, in this embodiment of the invention, passes through the first condenser 4. Once there, given that the temperature of the cold auxiliary stream is lower than the temperature of the spent working stream, the spent working stream transfer part of its thermal energy to the cold auxiliary stream. As a consequence thereof, the spent working stream is condensed and the cold auxiliary stream increases its temperature, becoming a spent cold auxiliary stream. The spent cold auxiliary stream then passes through the second section 31 of the cold auxiliary circuit, and returns back to the vortex tubes through the accessory inlet IV, driven by the pump 39. Once inside the vortex tubes, the spent cold auxiliary stream reduces its temperature and returns to its initial state.

Fig. 2 shows a second embodiment of a system for converting thermal energy into mechanical energy according to the present invention.

The system illustrated in Fig. 2 is similar to the first embodiment (shown in Fig. 1). Consequently, in the sake of conciseness, the arrangement and operation of those elements of the second embodiment of the system of the present invention, which were already present in the first embodiment, will not be discussed again.

In this second embodiment, the system according to the present invention -besides of the working circuit 10, 10a and the auxiliary circuit 10b- it also comprises a third separated circuit 36, 37 (known as the "absorbent circuit"); through which a stream of absorbent - having a high boiling temperature- circulates. The boiling point of the absorbent is in the range between + 100 °C / +120 °C and it is considered high only in respect to the lower boiling points of the substances constituting the hot and cold auxiliary stream. Thus, for example, the working fluid employed in various embodiments may be ammonia, two or more hydrocarbons, two or more freons, carbon dioxide, mixtures of hydrocarbons and freons, or the like. In general, the working stream may be mixtures of any number of compounds with favorable thermodynamic characteristics especially in embodiments where working stream is completely separated from auxiliary stream and absorbent stream.

The working stream may be also a mixtures of any number of compounds with favorable thermodynamic characteristics and appropriate solubility in absorbent stream in embodiments where working stream is not hermetically separated from auxiliary and absorbent stream.

For example in the embodiment shown in Fig. 2 water can be an absorbent for ammonia which may constitute auxiliary stream while a working stream (as completely isolated stream in this embodiment) can be composed from a large variety of hydrocarbons, freons, carbone dioxide, mixtures of hydrocarbons and freons, or the like which having boiling point above boiling point of ammonia.

Water solutions of ethanolamine (2-aminoethanol, monoethanolamine, or the like of boiling points below 120°C can be an absorbent for carbon dioxide, mixtures of large variety of hydrocarbons which may also constitute possible variety of auxiliary streams in embodiment 2(C).

In the embodiments shown in Figures 3, 4 and 5 where working streams and auxiliary streams contain the same compositions of substances the most preferred working fluid is ammonia and the most preferred absorbent is water, although another substances with favorable thermodynamic properties and appropriate solubility can be used.

In embodiment shown in Fig.1 where no absorbents are used the nitrogen or the like gas with low boiling point can be used as an auxiliary stream. In such case the hot auxiliary nitrogen stream after passing through heat exchanger 3 having temperature decreased down to approximate 70 -80 C is pumped directly into vortex tubes (inlet III) by pressure generated by screw compressor (not shown in Fig. 1) bypassing heater 5. In such variant of embodiment the heater 5 shall not be used. The cold auxiliary nitrogen stream will have the temperature much below spent working stream of ammonia at a pressure generated by screw compressor below 10 Bar at the input I of vortex tubes.

In the second embodiment of the present invention (shown in Fig. 2) both, the working stream and the auxiliary stream, are low boiling streams comprising, either a single a low boiling substance or, alternatively, a mixture of several low boiling substances.

As it will be explained in further detail below, in this second embodiment of the system according to the present invention, the absorbent stream is mixed with part of the cold auxiliary stream, in order to facilitate said part of the cold auxiliary stream to return to the boiler 5, 6, in the form of a hot gaseous stream through a first return conduit 28.

Thus, in this second embodiment of the system according to the present invention, the cold auxiliary stream is able to return to the boiler at a temperature which is considerably higher, than in the case of the first embodiment. Consequently, less thermal energy from the boiler is required to heat the auxiliary stream which subsequently leaves the boiler through one of its outlets. This results in a better utilization of the thermal energy coming from the external heat source Q

In addition, in this second embodiment of the invention, the hot auxiliary circuit coming out from the hot outputs III of the vortex tubes is divided into two different branches: a first branch 32 of the hot auxiliary circuit passes through the first heater 3, where it superheats the working stream (as it also happened in the first embodiment of the invention), while a second branch 33 of the hot auxiliary circuit passes through a second heater 3a, where it heats the absorbent stream.

Similarly, in this second embodiment of the invention, the first section 30 of the cold auxiliary circuit coming out from cold output II of the vortex tubes is divided into two different branches: a first branch of the first section 31 of the cold auxiliary circuit is driven by a second Tesla disc pump 16 and passes through the first condenser 4, where said first branch of the first section 31 of the cold auxiliary circuit condenses the spent working stream (as it also happened in the first embodiment of the invention), while a second branch of the first section 31 of the cold auxiliary circuit is used for condensing the absorbent stream.

The liquid absorbent 23 is pumped out from a separator 24 by a pressure pump 22, through a first section 37 of the absorbent circuit. Said first section 37 of the absorbent circuit passes through the second heater 3a wherein the absorbent gains thermal energy from the second part of the hot auxiliary stream (which is circulating through the second branch 33 of the hot auxiliary circuit) and, therefore, suffers a phase transformation into vapor form. Increasing the temperature of the absorbent stream facilitates the subsequent mixing of the absorbent stream with the cold auxiliary stream.

In fact, after leaving the second heater 3a, the absorbent then enters into a mixer 9 located downstream the first condenser 4, through a nozzle 20a. Inside the mixer, the absorbent stream (which has a high boiling temperature) mixes with the first part of the cold auxiliary stream (which has a low boiling temperature), after said first part of the cold auxiliary stream has condensed the spent working stream. The stream resulting from this mixture (hereinafter the "rich stream"), which includes a content of absorber in a weight ratio of about 30% or less (in the case where the absorbent is water and the auxiliary flow - ammonia 60% or more) , is then driven by the pump 40 through the second section 36 of the absorbent circuit.

The rich stream is sent under pressure by a pump 40, to a cavitation device 17. The cavitation device 17 is, in this embodiment of the invention, a mechanical rotary hydrodynamic cavitation device having a shaft which is connected to the hollow shaft 12 of the turbine 2. Consequently, the rotation of the hollow shaft 12, caused by the expansion of the working stream, also induces the rotation of the shaft of the cavitation device 17.

In turn, the rotation of the shaft of the cavitation device 17, which has indentations, induces the rapid formation and collapse of cavitation bubbles over thin layers of the stream 35 which circulate inside said cavitation device (hereinafter, the "cavitation stream").

High temperatures occurring inside the bubbles (which usually are in the range of 200 °C) are transmitted to the high boiling substance(s) that formerly composed the absorbent stream, as well as to the low boiling substance(s) that formerly composed the cold auxiliary stream. As a result, a temperature gradient appears inside the cavitation stream 35, inducing a partial separation of the low boiling substance(s) from the absorbent substance(s).

Said separated low boiling substance(s) form a hot gaseous stream, which returns to the boiler 5, 6 through a first return conduit 28.

On the other hand, the low boiling substance(s) that still remain absorbed by the absorbent form a lean stream. The lean stream leaves the cavitation device 17, through a lean stream conduit 29, which passes through a third heater 19. Inside the third heater 19, the lean stream receives thermal energy from the second branch 33 of the hot auxiliary circuit which also passes through the third heater 19, so it boils intensively. After passing through the third heater 19, the lean stream returns in vapor form to the gravity separator 24.

Inside the gravity separator 24, the remaining low boiling substance(s) that formerly composed the cold auxiliary stream, go back to the boiler 5, 6 through a second return conduit 38. On the other hand, the lower part of the gravity separator 24 is in contact with the second condenser 25.

The absorber falls by gravity to the lower part of the separator 24 and, once there, the absorber gives part of its thermal energy to the second branch of the first section 31 of the cold auxiliary circuit, which passes through the second condenser 25. Consequently, the absorber returns to its initial state in liquid form 23.

Fig. 3 shows a third embodiment of a system for converting thermal energy into mechanical energy according to the present invention.

In this third embodiment, the system according to the present invention also comprises a working circuit 10, 10a, an auxiliary circuit 10b and an absorbent circuit 36, 37. In addition, the working stream and the auxiliary stream, are low boiling streams, of the same substance/composition of substances, while the absorbent is a high-boiling stream absorbing substances of both auxiliary and working streams. Unlike the systems shown in Fig. 1 and Fig. 2, the substances of the working circuit stream are not completely isolated from the substances of the auxiliary circuit stream. Contrarily, the absorbent stream is a high boiling stream.

Moreover, in this third embodiment of the invention, the hot auxiliary circuit coming out from the hot outputs III of the vortex tubes is divided into two different branches:

- a first branch 32 of the hot auxiliary circuit passes through the first heater 3, where it superheats the working stream, the first branch 32 of the hot auxiliary circuit also passing through the second heater 3a, where it heats the absorbent stream;
- a second branch 33 of the hot auxiliary circuit passes through a third heater 19, where the lean mixed stream of the absorbent and the working flow is heated.

Moreover, in this third embodiment of the invention, the cold auxiliary circuit 30, 31 passes through the second condenser 25, so at least part of the cold auxiliary stream condensates the absorbent stream, which also passes through said condenser 25 and has a higher temperature than the cold auxiliary stream.

As it will be explained in further detail below, in this third embodiment of the system according to the present invention, the absorbent stream is mixed with the spent working stream in the cavity 9 of the hollow shaft 12 of the turbine 2, in order to facilitate said spent working stream to return to the boiler 5, 6. The cavity 9 shown in Fig. 3 performs the same function as the mixer 9 in Fig 2. and the nozzle 14 execute the same function as the nozzle 20a in Fig 2.

Thus, in this third embodiment of the system according to the present invention, the spent working stream is able to return to the boiler at a temperature which is considerably higher, than in the case of the first embodiment. Consequently, less thermal energy from the boiler is required to heat the working stream which subsequently leaves the boiler through one of its outlets. This results in a better utilization of the thermal energy coming from the external heat source Q.

In this third embodiment the cold auxiliary stream (consisting of the same substances as the working flow) does not condense the working stream as in the first two systems, but only condenses the absorbent stream. In this case, the hot auxiliary stream (consisting of the same substances as the working flow) performs the same function as in the system shown in Fig. 2.

More particularly, in this embodiment, the absorbent circuit 37 is connected, by one first end to a separator 24, and is connected by a second end to the cavity 9 of the hollow shaft 12 of the turbine 2, the first section 37 of the absorbent circuit being configured such that the absorbent stream mixes inside the said cavity 9 with the spent working stream.

The stream resulting from the mixture of the absorbent stream and the spent working stream (hereinafter the "rich stream"), leaves the turbine 2 through a centrifugal Tesla disc pump 8.Then, the rich stream driven by the pump 40 through the second section 36 of the absorbent circuit, which is connected to a cavitation device 17.

The cavitation device 17 also is, in this third embodiment of the invention, a mechanical rotary hydrodynamic cavitation device having a shaft which is connected to the hollow shaft 12 of the turbine 2. Consequently, the rotation of the hollow shaft 12, caused by the expansion of the working stream, also induces the rotation of the shaft of the cavitation device 17.

Like in the previous embodiment, the rotation of the shaft of the cavitation device 17, which has indentations, induces the rapid formation and collapse of cavitation bubbles over thin layers of the stream 35 which circulate inside said cavitation device (i.e., the "cavitation stream").

High temperatures occurring inside the bubbles are transmitted to the high boiling substance(s) that formerly composed the absorbent stream, as well as to the low boiling substance(s) that formerly composed the spent working stream. As a result, a temperature gradient appears inside the cavitation stream 35, inducing a partial separation of the low boiling substance(s) from the absorbent substance(s).

Said separated low boiling substance(s) form a hot gaseous stream, which returns to the boiler 5, 6 through a first return conduit 28.

On the other hand, the low boiling substance(s) that still remain absorbed by the absorbent form a lean stream. The lean stream leaves the cavitation device 17, through a lean stream conduit 29, which passes through a third heater 19. Inside the third heater 19, the lean stream receives thermal energy from a second branch 33a of the hot auxiliary circuit which also passes through the third heater 19, so it boils intensively. After passing through the third heater 19, the lean stream returns in vapor form to the gravity separator 24.

Inside the gravity separator 24, the remaining low boiling substance(s) that formerly composed the working stream and the auxiliary stream, go back to the single boiler,6 through a second return conduit 38. On the other hand, the lower part of the gravity separator 24 is in contact with the second condenser 25.

The absorber falls by gravity to the lower part of the separator 24 and, once there, the absorbent gives part of its thermal energy to the second section 31 of the cold auxiliary circuit, which passes through the second condenser 25. Consequently, the absorber returns to its initial state in liquid form 23.

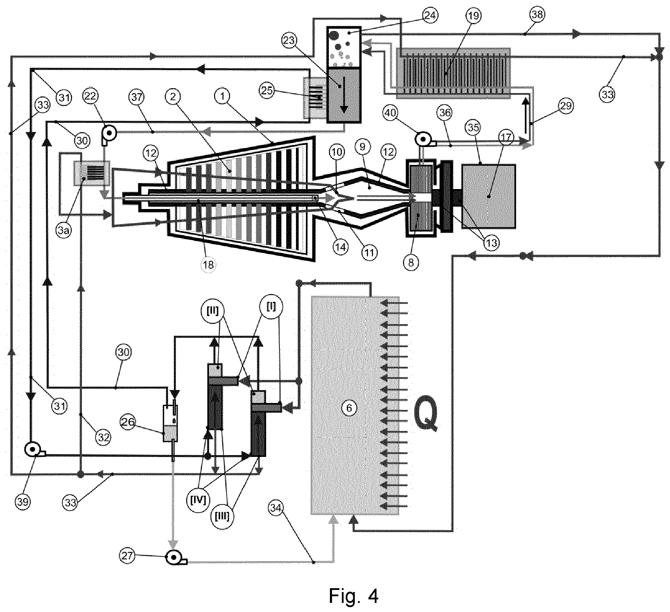

The principal difference between the embodiments shown in figures 3 and 4 is that in Fig. 4 there is no cavitation device, which shows the possibility of functioning of the cycle in a simplified version.

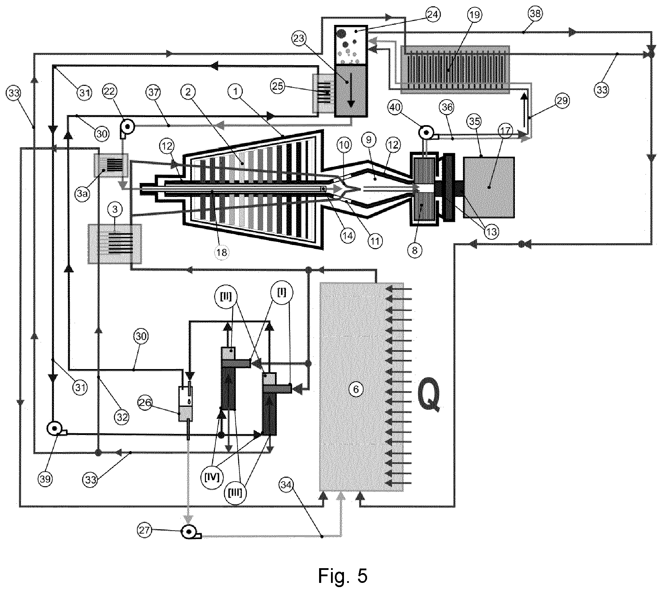

The difference between embodiments shown in Fig. 5 and Fig.3 consists in that, in embodiment shown in Fig. 5 the part of the auxiliary hot stream after leaving the vortex tubes (III) in the form of a hot auxiliary stream 33 is separated in the form of a branch 32 and heats the absorbent stream through the heat exchanger 3a. Further, the hot auxiliary stream moving along the branch 32 performs the function of the working stream coming from the branch 32 to the expansion device where it execute useful work after which it is mixed with the absorbent stream 37 in the cavity 9. Hot auxiliary stream in the branch 33 flows through heat exchanger 19 and forces the stream 29 to boil for separating substances of absorbent stream and substances of auxiliary stream (working stream).

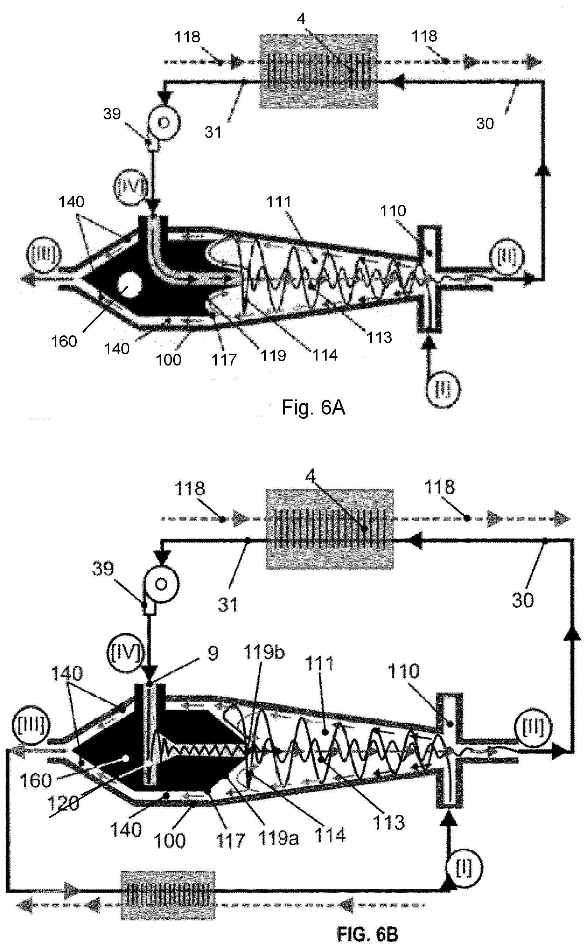

Fig. 6A shows a first possible embodiment of a vortex tube according to the present invention, used in a system for converting thermal energy into mechanical energy.

Said vortex tube comprises a hollow body 100, elongated in an axial direction, which defines an internal cavity 111. One end of the internal cavity 111 ends in a swirl chamber 110 which is connected to a main inlet I.

Consequently, if a stream of pressurized gas is injected through the main inlet I tangentially into the swirl chamber 110, said stream is accelerated to a high rate of rotation, thereby creating a vortex of gas stream that enters into the internal cavity 111.

Due to the existence of the throttle body 160, which acts as a stopper and it is located at one first end of the internal cavity 111 of hollow body 100, only the axially peripheral part 114 of the vortex pressurized stream will able to reach the annular nozzle 140 and escape from the vortex tube through the hot output III.

The reminder part of said vortex pressurized stream, i.e. the axially central part 113 of said vortex stream, is forced to return from the throttle body 160 and will only be able to leave the vortex tube through the cold output II, which in this particular embodiment of the invention is an outlet port of reduced diameter, disposed in an axially central part of a second end of the internal cavity 111 of hollow body 100.

Thus, the vortex tubes according to the present invention can split the pressurized stream, which enters into the vortex tube through the main inlet I, into a hot stream (which leaves the vortex tube though hot output III) and a cold stream (which leaves the vortex tube though cold output II and has a lower a temperature than the hot stream).

In some embodiments of the present invention in which the pressurize stream injected through the main inlet I is air compressed at 6, 9 Bar (900 psi), the hot stream can reach temperatures of up to 200 °C (392 °F), while the cold stream can reach a temperature of - 71°C.

Vortex tubes according to the present invention can be optionally provided with a control valve in their hot output III, by means of which the temperature of the hot stream and which the temperature of the cold stream, can be controlled.

In the particular embodiment shown in Fig. 6A, the surface 119 of the throttle body 160 which is closer to the cold output II has the shape of a concave cup, with edges 117. Additionally, in the embodiment shown, the cold output II is connected to a return pipeline comprising a first section 30 and a second section 31, through which the cold stream flows. The return pipeline 30, 31 passes through a condenser 4 wherein the cold stream condensates other stream at a higher temperature, and which flows through the conduit 118.

The second section 31 of the return pipeline is connected to a pump 39, which injects the cold stream back into the internal cavity 111 of the vortex tube through an auxiliary inlet IV, in same the direction of motion than the axially central part 113 of the vortex pressurized stream. Thanks to this particular arrangement, in the vortex tubes according to the present invention there is a more intense energy and mass exchange between the axially peripheral part 114 and the axially central part 113 of the vortex pressurized stream, compared with the vortex tubes that form part of the state of the art.

Fig. 6B shows a second embodiment of a vortex tube according to the present invention, similar to the embodiment of Fig. 6A, but in which, the surface 119a of the throttle body which is closer to the cold output has a conical shape, with edges 117 and a tip 119b. In this particular embodiment, the auxiliary inlet IV is also provided with a cavity 120.

Fig. 7A shows a possible example of a turbine 2.

Said turbine 2 comprises a hollow shaft 224, having an internal cavity 224a. The internal cavity 224a is in contact by one first end thereof with a plurality of inlet ducts 246, while a second end said of the internal cavity 224a is in contact with a plurality of outlet ducts 246a.

The turbine 2 also comprises a rotor drum 202 provided with a plurality of flat discs 223 with tapered edges disposed in parallel to each other defining a plurality of inter-disc spaces 222. Discs 223 are perpendicularly joined to the hollow shaft 224 and are arranged in way such that the inter-disc spaces 222 are in fluid communication with the inlet ducts 246. This particular design of the rotor drum 202 allows the use of different mediums as working stream, for example mediums with drip content, multiphase mediums, etc.

A plurality of pulse generators 203 are disposed radially in the rotor housing around conical inclined nozzles 208 and discs 223 that rotate together. The rotor is provided with conical inclined nozzles 208 arranged on the annular surface 216, which is integral part of the rotor drum 202 (forms a single piece). Consequently, the inclined nozzles 208 are integral part of the rotor. Conical slopings of the nozzles 208 is facing its contractions to the periphery of the discs 223. The nozzles 208 are rotated together with discs 223, the entire rotor and the disks of the pump 227 under the influence of shock waves produced by pulse generators 203. The annular surface with the nozzles 208 in it is fixed in the grooves of the external rotor disks as close as possible to the periphery of the discs 223. The nozzles 208 are arranged with the possibility of injecting the working flow, which executed the most of useful work on the rotation of the rotor, into the inter-disc spaces 222, since it is the inclined nozzles 208 with their wide sides that take the shock waves from the pulse generators and create the torque and tangential forces in each nozzle 208 exposed to each sequential shock wave, therefore of the entire rotor and the hollow shaft 224. Working stream partially mostly spent on the inclined nozzles 208 is chilled and flows through the constrictions of the nozzles 208 rotating together with the discs 223 and then flows through the inter disc space 222 transferring the residual energy to the hollow shaft 224, entering into the inner cavity 224A through the input channels 246 (as schematically shown by arrows lws), passing through the specified internal cavity 224A (as schematically shown by arrows Cws) and exiting via the output channels 246a (as schematically shown by the arrows Ows). The working flow coming out through the 246a outlet channels is a spent working flow, since it converted most of its initial energy into rotational mechanical energy transmitted to the rotor through the inclined nozzles 208 and to the disks 222 and, consequently, to the hollow shaft 224, which is firmly connected by the annular surface 216 with inclined nozzles 208 and with the said disks 222 by means of external rotor disks, between which the disks 223 and the annular surface 216 with inclined nozzles 208 are firmly fixed.

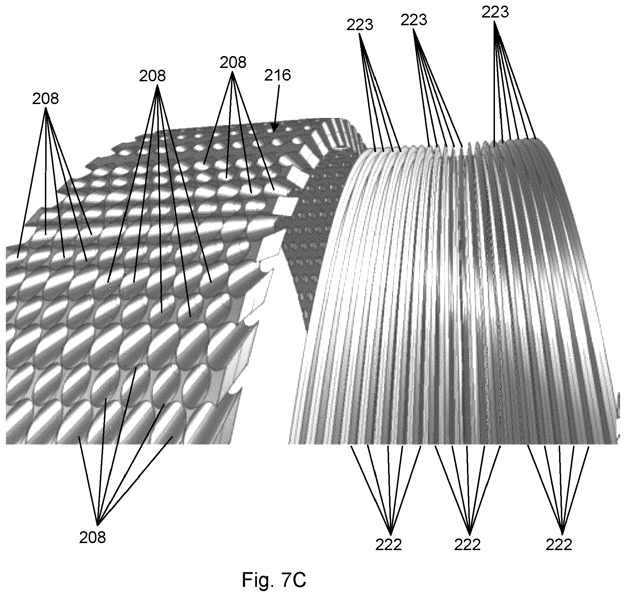

Fig. 7C shows in more detail the arrangement of the conical inclined nozzles 208 with respect to discs 223, in the turbine 2 illustrated in Fig 7A. In this particular example, said nozzles 208 are opening made on the annular surface 216 of the rotor.

The turbine 2 illustrated in Fig 7A is also provided with a conduit 226 for high boiling absorbent. Conduit 226 partially passes inside the hollow shaft 224, so the high boiling absorbent (i.e., an absorbent having a boiling temperature above 90 °C at normal atmospheric pressure) mixes inside the internal cavity 224a with the working stream. This allows the turbine 2 to be used in a system for converting thermal energy into mechanical energy, according to those described in Figs. 3-5.

In addition, hollow shaft 224 is integral (i.e., forms a single piece) with the shaft 238 of a centrifugal Tesla pump 227, connected to the outlet ducts 246. Centrifugal Tesla pump 227 is designed to create a constant vacuum inside the hollow shaft 224, inside the conduit 226, and in the inter-disc spaces 222, as well as for creating pressure for supply of the working stream.

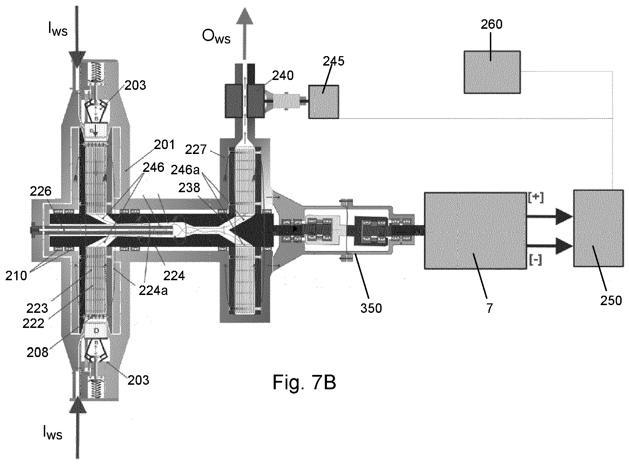

Fig. 7B shows a second example of a turbine 2. In this second example the rotor drum 202, the hollow shaft 224 and the centrifugal Tesla Pump 227 are enclosed inside a thermally insulating housing 201. Bearings 210 are also provided, in order to improve the rotation of the hollow shaft 224 and of the shaft 238 of the Tesla pump, which is integral with hollow shaft 224.

Shaft 238 of the centrifugal Tesla pump is, in turn, connected to a first end of a quick release vacuum coupling 350. Said coupling 350 will be described in more detail below. The other end of the coupling 350 is connected to an electrical generator 7. By means of this particular arrangement it is possible to transform the mechanical rotation energy of the hollow shaft 224 and the shaft 238, into electrical energy. Said electrical energy is accumulated in a battery 250 which, in turn, energizes a control unit 260 and the motor 245 of an auxiliary compressor 240.

In some examples auxiliary compressor 240 is used to provide the initial circulation of the auxiliary stream before the system for converting thermal energy into mechanical energy has reached a working mode.

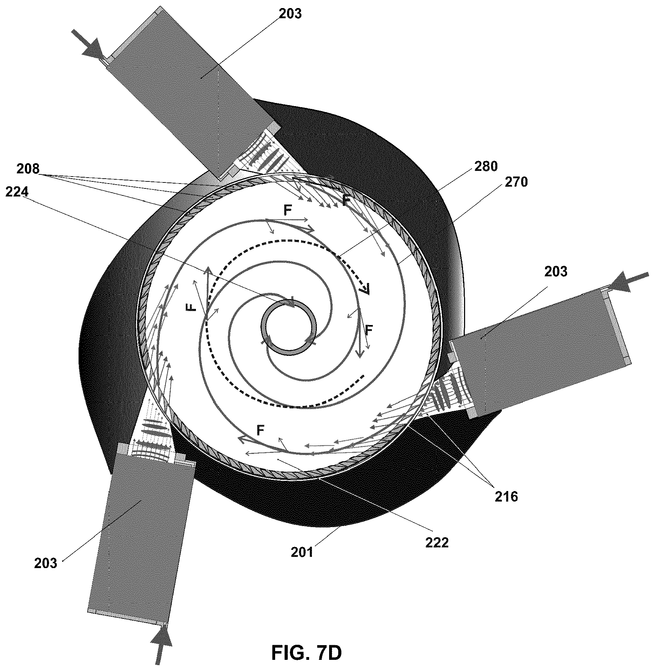

Fig. 7D illustrates, in cross section, a detail of the turbine 2 shown in Fig. 7A. The purpose of this figure is to schematically show how the working stream is injected in the form of shock waves onto the nozzles 208_of the rotor into inclined nozzles 208 and further into the spaces 222 between the discs 223. The direction of injection is tangential and, in this particular example, said direction is between 11-15 degrees, with respect to the periphery of the annular surface 216 of the rotor.

This arrangement results in an optimal conversion of the energy of the working stream into mechanical rotation energy. More particularly, the shock waves of the working stream affect inclined nozzles 208, create powerful rotation torque of rotor, leaving the nozzles 208, penetrate interdisc spaces 222, follow the flow path indicated with the reference numeral 270 in Fig. 7D. Consequently, the residual kinetic energy of the working stream is passed to the rotor drum 202 by means of the tangential friction forces F shown in Fig 7D, which result in additional harvesting of residual kinetic energy of a working stream and support a rotation torque achieved in nozzles 208 both acting on the hollow shaft 224 (and on the shaft 238 of the Tesla pump which is joined to the hollow shaft 224). The direction of said rotation torque is indicated in Fig. 7D with the reference numeral 270.

Figs. 8A to 8D are cross section schematic views which show the operation of a first example of a pulse generator 203 of a turbine not covered by the present invention.

The pulse generator 203 comprises a casing 300, which in this particular example is provided with an internal hollow space divided into two different regions 305a, and 305b. Said casing is also provided with a triggering chamber 313.

A plunger 306 extends through both regions 305a and 305b of the internal hollow space, passing through a cylindrical orifice between areas 305a and 305b without a sliding seal with minimal technically possible clearance 304 that is, the minimal clearance which provides non-friction operation and at the same time, provides choke effect in narrow channel at sharp pressure change upstream or downstream. The rod 314 also does not have a sliding seal with the body 300 in the presence of technically minimal possible gap. Such clearances are necessary to ensure that there is no friction when the pulse generator 203 is operating, i.e. the plunger 306 and the rod 314 move sharply towards the return spring 309 and back (although the distance covered is minimal). The plunger 306 is attached with the first end to the piston 307 and attached with the second end to the valve plug 308. In addition, the piston 307 is in contact with the return spring 309, and the valve plug 308 is one piece with the rod 314, so all elements (valve plug 308, rod 314, plunger 306 and piston 307) can only move together in the direction of the return spring 309 while the return spring 309 is contracted and creates a counteracting force. In the position where the valve plug 308 has contact with the seat of the pulse generator 203, the return spring 309 is in a minimally contracted state.

In this particular example, three different faucets 311a, 311b, 311c are provided. When faucet 311c is open, it allows the flow of a working stream $l_{ws}$ through the intake line 312a into region 305b of the internal hollow space. Similarly, the faucet 311b in its open state allows of a working stream $l_{ws}$ into region 305a of the internal hollow space. Finally, faucet 311a is intended to control the flow of working stream $l_{ws}$ through intake line 312b to the triggering chamber 313.

Triggering outlet line 315 is disposed between the triggering chamber 313 and the output orifice 310; while a triggering valve 316 is disposed in the outlet line 315 in order to trigger movement of the rod 314 inside triggering chamber 313 and simultaneously initiate movement of the valve plug 308, the plunger 306 and the piston 307 in the direction of the return spring 309.

Figure 8A shows the pulse generator 203 in its initial state, in which faucets 311a, 311b, 311c are in their open position, so the operating working stream under the constant pressure starts to flow simultaneously into regions 305a, 305b of the internal hollow space and into the triggering chamber 313. The working flow (which passes through intake lines 312a, 312b to the regions 305A, 305b and working chamber 313) is represented by light-colored arrows. The triggering valve 316 is closed. The plug 308 of the pulse generator 203 is in its first position, resting on the seat of the pulse generator 203 and hermetically isolating the internal hollow space 305b, 305a and 316 from the output orifice 310. The rod 314 is also in its first lower position.

Figure 8B schematically shows how the pressure exerts (represented by light-colored arrows) on the piston 307 and inside region 305b. The reaction forces acting on the rod 314 and the plunger 306 are shown with dark color arrows identified with reference F. In this position the force created by pressure and acting on the piston 307 together with the force created by minimally contracted return spring 309 is less than the force acting on effective cross section of the plug 308 of the pulse generator 203. In this case, the force in the triggering chamber 313 acting on the effective cross-sectional area of the rod 314 is the same force that affects the effective cross-sectional area of the plug 308, since the same pressure in all internal regions of the pulse generator 203 equally affects all objects perpendicular to their cross-sectional areas. Thus, the part of the rod 314 disposed in the triggering chamber 313 is the integral part of the effective cross-sectional area of the plug 308.

Figure 8C schematically shows the situation where the triggering valve 316 is opened and the faucets 311a, 311b and 311c are closed; the volume of the triggering chamber 313 is combined with external environment through triggering outlet line 315. The operating pressure in the triggering chamber 313 drops sharply. This means that the pressure exerted on the effective cross-sectional area of the plug 308 decreases by the amount of pressure drop in the triggering chamber, or in other words, the effective cross-sectional area of the plug 308 decreases sharply by the value of the effective cross-sectional area of the rod 314. The effective cross-sectional area of the plug 308 becomes less than effective cross-sectional area of the piston 307 by design set value determined by the ratios of all the mentioned cross-sectional areas. It is taken into account that the force required to compress the return spring 309 is much less than the resulting force F1, which occurs due to the difference created between the cross-section areas of the plug 308 and the piston 307. Thus, the vector of the resulting force shown in Fig. 8B changes to the opposite direction at the moment of opening the triggering valve 316 shown in Fig. 8C. It is particularly important to note that due to high speed of process, of changing direction of the resultant force F1, the structural clearances provided between the rod 314 and casing 300 and between the plug 306 and the casing 300, the flow of the working fluid between the cavities and change the values of pressure in the inner regions of pulse generator 203 is blocked due to the throttle effect occurring in such clearances, therefore such factors can be considered negligible small.

At this point, the return spring 309 is unable to compensate the force exerted on the piston 307 by the working pressure, and it is unavoidably compressed by the resulting force F1. The minimal displacement of the plug 308 from its first position to the second position simultaneously with displacement of the piston 307 together with the plunger 306 and the rod 314 causes contraction of the return spring 309. This process is amplified many times due to the termination of Pascal's law for isolated volume and due instant disappearance of the static force acting on the effective cross section of the plug 308 in the region 305b. Instead of such static force, there are forces produced by working fluid flows that tend to leave the region 305b, which can be considered negligible relative to the force acting in the region 305a, which is proportional to the cross-sectional area of the piston 307.

Therefore, the working fluid under the pressure containing in the region 305b of the internal hollow space displaced abruptly into the output orifice 310 and so the working fluid explosively exits the pulse generator 203 through the output orifice 310. This process is so sharp that it causes a shock wave to occur depending on the initial working pressure. Fig. 8C shows schematically working fluid pulse through the output orifice 310, which causes an instantaneous decrease in pressure inside the inner hollow space 305b. However, the internal hollow space 305a remains isolated from the external environment and the operating pressure acting on the piston 307 also remains isolated from the external environment. This prevents the return spring 309 to return to initial position and to return the system to position 1 as shown in figure 8a.

Fig. 8D shows how the pressure relief from region 305a which takes place subsequently, causes the pulse generator 203 to return to its original state. The throttle effect that blocks the clearances at the moment of the pulse and at the moment of a sharp drop in pressure in the cavity 305b ceases after the end of the pulse. After the end of the pulse, the working fluid flows from the region 305a to the region 305b through the clearance 304 at a very low speed. Therefore, when the pulse is completed, the 311b, 311c and 311a faucets are open (shown in Figure 8a). The pressure in the triggering chamber 313 affects the cross section of the rod 314 and contributes the force to the return spring 309 to expand. The pressure in all regions becomes equal and the pulse generator 203 returns to its original state (position 1 shown in Fig. 8A). The volume of the region 305a is designed to be minimal, as well as the volume of the triggering chamber 313 to ensure the maximum speed of the full charge - discharge cycle. Figures 8A to 8D demonstrate the physical principle of obtaining a pulse at the rate of free expansion of a gas at a given pressure.

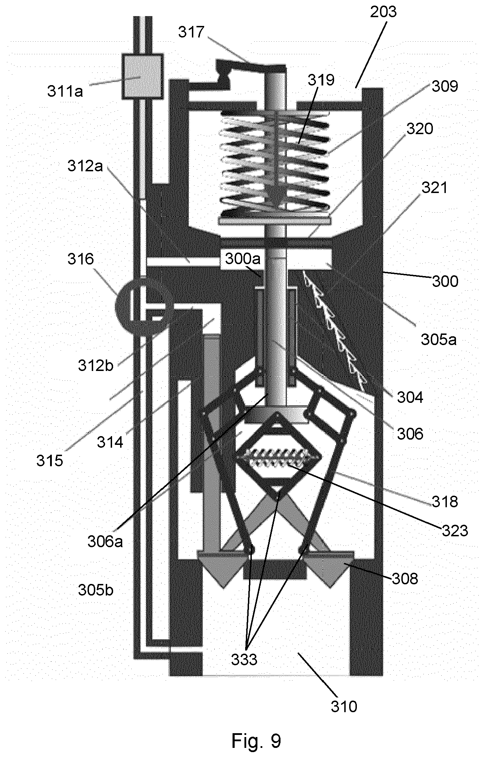

Figure 9 shows second example of a pulse generator of a turbine not covered by the present invention.

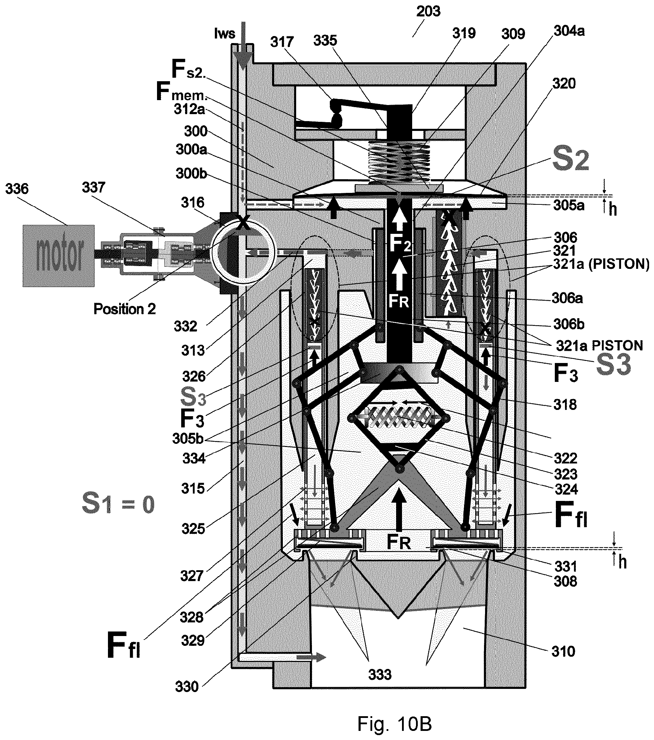

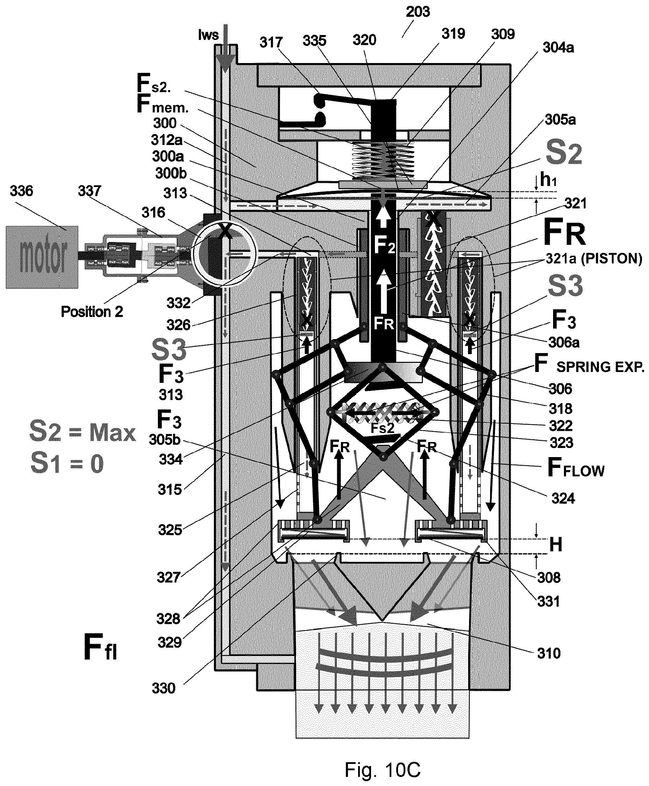

Said pulse generator 203 comprises a casing 300, which in this particular example has an internal hollow space divided into two different regions 305a, 305b, as well as a triggering chamber 313. Triggering channel 312b and triggering chamber 313 are in fluid communication with regions 305a and 305b in its closed charging state (or initial sate, position 1 shown in Fig. 10A) when the pulse generator 203 is charging by operating pressure lws, but the triggering channel 312b and the triggering chamber 313 are isolated from the region 305a and 305b during subsequent states (that is, during the initiation state shown in Fig. 10B and during the discharging state, position 2 shown in Fig. 10C) wherein the pulses are produced. In the initial sate (Fig. 10A), when the pulse generator 203 is in charging state, both regions 305a and 305b are in fluid communication with each other also via valvular conduit 321. The valvular conduit 321 is firmly mounted in the casing 300 in such a way that the free direction of the valvular conduit 321 is directed from the region 305b to the region 305a. This is arranged so that the flow of the working fluid from the high-pressure region 305a to the low-pressure region 305b is completely blocked through the valvular conduit 321 at the moment of the pulse when the pressure in the region 305b drops sharply.

The plunger 306 is located in two regions 305a and 305b of the internal hollow space, passing through a smaller diameter of cylindrical orifice between the areas 305a and 305b with a technically minimal clearance 304a without a sliding seal. A smaller cylindrical orifice extends into the 305a region. The plunger 306 also passes through the hollow cylinder 306a with a technically minimal clearance 306b without having a sliding seal. A cylindrical orifice of larger diameter extends into the region 305b. The difference in the diameters of the cylindrical orifice in the casing 300 creates a ledge 300a. The hollow cylinder 306a is positioned in a larger diameter of orifice between region 305A and 305b so that it is present only in the region 305b, and the ledge 300a prevents axial movement of the hollow cylinder 306a from the region 305b into the region 305a. The hollow cylinder 306a has a minimum technical clearance 300b with the body 300 and does not have a sliding seal with the casing 300. The hollow cylinder 306a and the plunger 306 freely move relative to each other and relative to the casing 300 in the axial direction almost with no friction, while the axial movement of the hollow cylinder 306a is limited by the ledge 300a towards the region 305a is limited by the ledge 300a.

In this particular example, the hollow rod 325 is an elongated tube with one axial through hole and several transverse through holes 327. On one side of the hollow rod 325, the valvular conduit 321a is rigidly mounted in it so that the free direction of the valvular conduit 321a is directed towards the transverse through holes 327 located at the other end of the hollow rod 325, in the opposite end of the hollow rod 325. This particular example contemplates the use of two hollow rods 325. Most of the outer surface of the hollow rods 325 is located inside the elongated parts of the casing 300 located in the area 305b. Each hollow rod 325 passes from the region 305b to its triggering chamber 313, and all triggering chambers 313 are in liquid communication with the annular triggering channel 332. The elongated parts of the casing 300 function as cylinders when the pressure drops sharply in the triggering chambers 313 and in the annular triggering channel 332. All valvular conduits 321a are rigidly mounted in each hollow rod 325 so that the free direction of each valvular conduit 321a is directed from the triggering chambers 313 to the region 305b through the hollow rods 325 and through holes 327. When the pressure drops sharply in the triggering chambers 313 and in the annular triggering channel 332, at the moment of pulse initiation (i.e., the initiation state shown in Fig. 10B), the sharp flow of the working fluid is completely blocked from the high pressure region 305b to the low pressure region (in the triggering chamber 313 and in the annular triggering channel 332). Each hollow rod 325 performs the function of a piston at the moment of impulse, since the entire cross-sectional area of each hollow rod 325 is affected by a force proportional to the pressure of the working fluid located in the high-pressure region 305b. This force is proportional to the cross-sectional area of each hollow rod 325. However, in mode 1 (Fig.8e1), each hollow rod 325 performs the function of a pipeline to ensure that the region 312b is filled with working fluid under the pressure lws passing from the intake line 312a through the annular triggering channel 332, through the triggering chambers 313, free directions of valvular conduits 321a and through the hollow rods 325.

Each hollow rod 325 is mechanically attached from the side of the through holes 327 to the annular holder 328 of the plug 308 of the pulse generator 203. Each hollow rod 325 is not one piece with the plug 308 and not one piece the holder 328. This is essential for simplifying production and it is an important aspect of a preferred embodiment of the invention. Each hollow rod 325 does not have a sliding seal with the casing 300 with a technically minimum clearance 326 between the casing 300 and each hollow rod 325. Clearances 306, 300b, 304a and 326 are necessary to ensure minimal friction when the pulse generator 203 is operating, i.e. when the plunger 306 and the hollow rods 325 are moving in direction of the membrane 320 and return spring 309 and back in the direction of the seat 330 (although the distance covered is minimal).

Said membrane 320 of the pulse generator 203 performs the same pushing function as the piston 307 of Figs. 8A-8D and is designed to bend when the force acting on it exceeds a certain predetermined value.

To ensure minimal friction, the plunger 306, the hollow rods 325, the hollow cylinder 306a and the surface of orifice between regions 305A and 305b must be made of light materials with medium degree of strength and having a minimum coefficient of friction, such as caprolactane, caprolon polyamide, or its analogues with preferred operating temperature from minus 60C to plus 120 with a melting point of 220-225C, usually produced for antifriction products). The plunger 306 is mechanically attached by the first end to the flexible membrane 320 and is mechanically attached by its second end to the annular holder 328 of the plug 308 via parallelogram 323 and a parallelogramic mechanism 318 via swivel joints 333 or strong flexing joints. The ring-shaped holder 328 of the plug 308 is connected to the parallelogram 323, to the arms of the parallelogram mechanism 318 through swivel or flexible joints 333 and is mechanically connected to the hollow rods 325. Combination of the plunger 306, the plug 308, the holder 328 the hollow rods 325, the parallelogrammic mechanism 318, the parallelogram 323, which al connecting the holder 328 and the plug 308 with flexible membrane 320 consists of several parts, four of which are the levers pivotally or flexibly connected to each other forming the parallelogram 323.

The plunger 306 in its lower part has a protrusion 334 on which there are mounts of some swivel or flexible joints 333 of the parallelogrammic mechanism 318 and parallelogram 323.

The hollow cylinder 306a does not have a direct mechanical connection to membrane 320. The swivel or flexible joints 333 of the levers parallelogrammic mechanism 318 are fixed on the bottom part of the hollow cylinder 306a. The swivel or flexible joints 333 of the parallelogrammic mechanism 318 are fixed on the protrusion 334 of the plunger 306.

The swivel or flexible joints 333 of the parallelogrammic mechanism 318 are also fixed on the holder 328.

The protrusion 334 of the plunger 306 is also pivotally connected to the parallelogram 323.

The parallelogram stoppers 324 located on the levers of the parallelogram 323 fix the parallelogram 323 in a rigid structural form in the absence of external contracting load on it and when a tensile axial force is applied to it, for example, when such a tensile force is created between membrane 320 and the plug 308 (the holder 328 of the plug 308).

Upon removal from the parallelogram 323 tensile axial force it can be shortened on its vertical axis, due to the fact that the hollow cylinder 306a when it stops by the ledge 300a it can slide freely along the plunger 306 due to kinematics parallelogrammic mechanism 318, and the parallelogram 323 may extend in the horizontal direction by stretching the spring 322 and simultaneously get shorter in vertical axis. When the spring 322 is stretched, the counteracting force Fspring exp is created (as shown in Figure 10C).

A minimum structural distance h is set between the ledge 300a and the top edge of the hollow cylinder 306a. Distance h is sufficient to reduce the (Fflow) to such a value that will not be able to affect the effective cross-sectional area of the plug 308 and will not sufficient to counteract the resulting force affecting membrane at the stage when the distance h reduced to zero and when the resulting force at membrane will continue to move the plug with increased speed and with reduced force by using only levers of parallelogrammic mechanism.

Distance h is set in (position 1, Figure 10A) with full contact of the plug 308 seat 330 when parallelogram 323 is stretched along the vertical axis due to small preset force Fs1 of the spring 322 when the stops 324 are in contact with the opposite levers of parallelogram 323.

In the example shown in Figs. 10A-10C the flexible membrane 320 is permanently in mechanical contact with the pad 335 of the return spring 309.

In this particular example, the plug 308 has an annular shape and can be made of thin flexible steel plate as one of the embodiments. The plug 308 is freely positioned inside the holder 328. Between the housing of the holder 328 and the plug 308 is a spring 329, which slightly presses the plug 308 towards the pullers 331 of the holder 328. In the position where the plug 308 has contact with the seat 330, the spring 329 of the plug 308 is in a minimally compressed state.

Thus, all elements (plug 308, holder 328, hollow rods 325, plunger 306, arms of the parallelogrammic mechanism 318, parallelogram 323, and some swivel or flexible joints 333 can move restrictively in the direction towards return spring 309 and towards the ledge 300a from the seat 330 during the initiation state and during the discharge state

(Fig.10B and Fig. 10C, respectively). In this case, the return spring 309 contracts and creates a counteracting force Fs2. the flexible membrane 320 also deforms and acts as a spring while creating a counteracting force Fmem as shown in Fig.-10B and Fig. 10C. In this case, the center of membrane 320 passes a certain distance. In the position where the plug 308 has contact with the seat 330, the return spring 309 is in the minimally compressed preset state.

In this particular example, only one universal hermetic valve is provided, which performs in different positions the functions of triggering valve 316 and the functions of faucet for filling the region 305b. Region 305a is in constant fluid communication with the external pressure source lws through the intake line 312a. The valve 316 is a rotary valve having a contact 317. The contact 317 is attached to the finger 319, which is mechanically connected to the membrane 320 via the pad 335. At maximum deformation of the center of the membrane 320, the contact 317 opens, which gives an electrical signal to the motor 336 of triggering valve 316 and triggering valve 316 switches from position 2 to position 1.. Triggering valve 316 is controlled by external electric motor 336, which is connected to the intake line 312a through a sealed coupling 337 in order to avoid leaks of the working fluid.

In the example shown in Figs. 10A to 10C the triggering outlet line 315 is located between triggering chambers 313 and the output orifice 310 of the pulse generator 203. Triggering valve 316 positioned in the triggering outlet line 315 to sharply drop pressure in the annular triggering channel 332 and in all triggering chambers 313 via the triggering outlet line 315 to move all hollow rods 325 inside annular triggering channel 332 and thereby to initiate movement of the annular holder 328, the annular plug 308, the plunger 306, the hollow cylinder 306a, the center of the flexible membrane 320, the parallelogrammic mechanism 318 and parallelogram 323 in the direction of deformation of membrane 320 and contraction of return spring 309.

The triggering valve 316 has two operating positions. During the closed charging state (first position, Fig 10A.), the lws pressure flows from an external source through intake line 312a simultaneously into all internal regions of pulse generator 203, but does not enter triggering outlet line 315. During the initiation state and the discharge state (Second position, Fig. 10Band10C) the triggering valve 316 closes the intake line 312a into the annular triggering channel 332, overlaps a direct channel between region 305a and annular triggering channel 332 and the triggering chambers 313 and simultaneously opens fluid communication between the triggering outlet line 315, annular triggering channel 332 and all triggering chambers 313.

Figure 10A shows the pulse generator 203 in its first state, (i.e., in the first position), so the constant operating pressure begins to flow simultaneously into the regions 305a, 305b and into the triggering chambers 313 of pulse generator. The flow of working fluid under pressure (which passes simultaneously through inlet lines 312a, and annular triggering channel 332 to two regions 305a and 305b) is represented by arrows. The fluid communication of the triggering outlet line 315 with all triggering chambers 313 and with annular triggering channel 332 is blocked. The plug 308 is in its first position, hermetically resting on the seat 330 of the pulse generator 203 and isolating the entire internal hollow space of pulse generator 203 from the outlet orifice 310. The hollow rods 325 are also in its first lower position.

The stoppers 324 located on the arms of parallelogram 323 fix the parallelogram 323 in a rigid form.

Parallelogram 323 is fully tighten along the vertical axis due to the action of pre-installed force Fs2 of the spring 322 while the stoppers 324 are in contact with the opposite levers of the parallelogram 323. There is a minimum distance h between the hollow cylinder 306a and the ledge 300a established.

As designed S1>S2, in the closed charging state, the force F2 created by evenly distributed pressure of working fluid acting on the cross-sectional area S2 of the membrane 320 together with the force created by the minimally contracted return spring 309 is less than the force F1 acting only on the effective cross-sectional area S1 of the valve plug 308 of the pulse generator 203. The same operating pressure in all the regions of pulse generator 203 equally affects all objects perpendicular to the areas of their respective cross sections. Since in this invention the hollow rods 325 are hollow and contain hollow valvular conduits 321a, the hollow rods 325 are uniformly subjected to pressure from all sides. They do not create forces that press the plug 308 towards the seat 330, regardless of operating pressure. In contrast to the effective cross-sectional area of the rod 314 shown in figure 8b, located in the triggering chamber 313, which is a physically integral part of the effective cross-sectional area of the plug 308, the hollow rods in the example shown in figure 10a to 10c are not objects that physically share effective cross-sectional area with the plug 308. The resulting force Fr acts on the plug 308 and the pulse generator 203 is in a stable closed state regardless operating pressure. To create such a resultant force Fr, the ratio S2<S1 and, respectively, F2<F1. F2-F1=Fr is sufficient. The force F3 is created and can be created in this example only at the initiation state. Moreover, to ensure closed position of the pulse generator 203, The Fr value can be minimal.

During the initiation state and the discharge state (second position, Fig. 10Band10C) the triggering valve 316 overlaps fluid communication between intake line 312a and annular triggering channel 332 and triggering chambers 313 and simultaneously overlaps the fluid communication between region 305a, and annular triggering channel 332 and all triggering chambers 313 and the same time opens fluid communication between triggering outlet line 315, annular triggering channel 332 and all triggering chambers 313.

Fig. 10B schematically shows the situation in which when the annular triggering channel 332 is combined with triggering outlet line 315, and minimum structural volume of all triggering chambers 313 is combined with the external environment through the triggering outlet line 315. The operating pressure in all triggering chambers 313 drops sharply. At this short moment, all valvular conduits 321a located in the hollow rods 325 act from the side of region 305b as fully closed valves (plugs). That is, at this short moment, all the hollow rods 325 become solid pistons in the elongated bodies of casing 300 of the pulse generator 203 At instant initiation state (when the minimum gap h is reduced), the cross-sectional area of such virtual hollow pistons (with valve channels 321a installed inside them) is affected by a pressure located in the region 305b and creates forces F3 having the same vector as the force F2. This means that, in contrast to the situation shown in Figure 8A (previous example), the force F1 acting on the effective cross-sectional area S1 of the plug 308 is reduced by the amount of force F3 created in total on all effective cross-sections of hollow rods 325. The valvular conduit 321 which is rigidly installed in the casing 300 at this moment blocks the fluid communication between region 305a and region 305b since the sharp pressure drop occurs in region 305b which has no other liquid communication with the region 305a. The valvular conduit 321 is installed so that its free channel is directed in the opposite direction - from region 305b to region 305a.

This means that at the moment of initiation, shown in figure 10B, the force created in the first position (Figure 10A) on the effective cross-sectional area S1 of the plug 308 is sharply reduced by the total value of all the forces F3 that contribute to the force F2, which leads to an effect similar to a sharp decrease in the cross-sectional area S1 of the plug 308, but having a different physical basis. The effective cross-sectional area S1 of the plug 308 becomes not less than the effective cross-sectional area S2 of membrane 320 by the constructively specified value of all the cross-sectional areas of the hollow rods 325 as in embodiments shown in Fig. 8 and 9. It is taken into account that the force $Fs2$ required to compress the return spring 309 and the spring resistance force $Fmem$ of membrane 320 is much lower than the resulting force $Fr$, which occurs due to the created difference between the values of the forces acting on the membrane 320 and the plug 308.

$$F1 >> F2 - Fs2$$

Thus, the vector of the resulting force $Fr$ in position 1 changes to the opposite vector at the moment of switching triggering valve 316 in position 2. It is particularly important to note that due to the high transience of processes associated with changing direction of the resulting force vector $Fr$, the minimum clearances 306, 300b, 304a and 326 provided between the hollow rods 325 and the casing 300, as well as clearances provided between the plunger 306 and the casing 300 block the working fluid due to the throttle effect.

At this point, the return spring 309 cannot compensate for the force exerted on the membrane 320 by the constant working pressure, and the membrane 320 is deformed by the resulting force $Fr$ directed against the force $Fs2$ and the force $Fmem$. With a minimum deformation of the membrane 320 by the amount of h, which is transmitted through the rigid vertical structure of parallelogram 323 in the direction of the resulting force $Fr$, there is a minimum movement of the holder 328 and the pullers 331 towards the membrane 320. Pullers 331 detach flexible ring-shaped plug 308 from the seat 330 by the distance h of deformation of membrane 320 center. Simultaneously with the displacement of the center of membrane 320, the hollow rods 325, the plunger 306, and the arms of the parallelogrammic mechanism 318 (fixed on the holder 328 and on the axially movable hollow cylinder 306a) are displaced by the same distance. This joint movement of the listed elements is limited by the distance h between the ledge 300a and the hollow cylinder 306a.

Figure 10B also shows how under the influence of the resulting force $Fr$, the distance h between the hollow cylinder 306a and the ledge 300a is reduced to zero, the center of the membrane 320 is minimally deformed and also passes the distance h, and the same distance h is created between the seat 330 and the plug 308. In this situation, the entire parallelogrammic mechanism 323 and parallelogram 318 without changing its shape moves in the direction of membrane 320 to the ledge 300a as a whole structure together with the plunger 306 and the hollow cylinder 306a. This movement of the entire system under the influence of the resulting force $Fr$ continues with the speed of movement of the center of the membrane 320 (the speed of free expansion of the working fluid at a given pressure) until the micron gap h is overcome. It is important to note once again that the micron gap h (Figs. 10A and 10B) is overcome without the participation of the kinematic and lever action scheme of the parallelogrammic mechanism 318 and parallelogram 323 and without load on their structural elements. This is an important subject since the maximum dynamic and force load on the structural elements of parallelogrammic mechanism 323 can occur only at the moment when the plug 308 is detached from the seat 330, i.e. at the moment when the force F1 ceases (as a static force depending on the value of the effective cross-section area S1 in a closed volume). This transient movement of the entire lever system at a distance h occurs until the ledge 300a touches the top of the hollow cylinder 306a. Having such gap h between the cover 308 and the seat 330 is necessary solely for using the principle of using parallelogrammic mechanism 318 after termination of force F1, After passing the gap h the parallelogrammic mechanism 318increasing the maximum linear speed of the plug 308, opening the maximum orifice between the seat 330 and the plug 308 for a minimum time with minimum deformation of membrane 320, when most of dynamic and other loads on the parallelogrammic mechanism 318 is dramatically reduced, due to termination of Pascal's law for closed volumes and complete disappearance of the static force F1 (Fig.10A).

Fig. 10C shows the development of movement when, when the plunger 306 and the holder 328, the hollow cylinder 306a rests against the ledge 300a and the spring 322 stretches generating the force **Fspring exp** and terminate the contact of the stoppers 324 with the opposite levers of the parallelogram 323. At this point, the plunger 306 continues to move towards the return spring 309 counteracting only the sum of forces **Fspring ex + Fmem.**

## Fr= F2- Fs1 - Fspring ex – Fmem (F1 terminated)

Figure 10C also shows how, when Pascal's law ceases to apply (for closed volumes), the force F2 acting on the cross-sectional area S2 of membrane 320 becomes sufficient for further movement of the plug 308 from the seat 330 by applying the force F2 transmitted from membrane 320 to the plug 308 exclusively through the system of levers of parallelogrammic mechanism 323 with increased speed and reduced force, which are proportional to the ratio of the lengths of the levers of the parallelogrammic mechanism 323. Increase in 2 times the distance H covered by the plug 308 relative the distance covered by the center of the membrane 320 at equal time is achieved at 2 times ratio of lengths of the respective levers of parallelogrammic mechanism 323. With an increase in the distance covered by the plug 308 due to the action of the levers of the parallelogram mechanism 323 (Fig. 8E 3) the force transmitted to the plug 308 from the membrane 320 (located at this short moment in an isolated high-pressure zone) will be reduced by 2 times due to the action of the lever law. In this situation it doesn't matter, as the forces opposing the movement of the plug 308 in this short time will be the flow force Fflow, envelopes, the plug 308 and a holder 328. The resulting force Fr Fig. 8E 3 has the maximum value.

Instead of static force F1, there are forces Fflow of movement of working fluid tending to leave the region 305b. Such forces can be considered negligible relative to the resulting force Fr generated by the pressure in the region 305a, which is proportional to the cross-sectional area of membrane 320. Therefore, the region 305b abruptly opens into the outlet 310 at a double speed of the speed of free expansion of the gas at a given pressure Iws, and the working fluid explosively exits the pulse generator 203 through the largest possible annular seat 330. This release is so sharp that it causes a shock wave depending on the initial working pressure.

Figure 10C schematically shows the output of working fluid pulse through the annular seat 330 and outlet 310, which causes an instantaneous decrease in pressure inside the region 305b. After the transient end of pulse, region 305a does not remain isolated from region 305b. The working fluid under pressure remaining and permanently supplied into region 305a begins to flow into region 305b in the direction opposite to the free direction through the valvular conduit 321 immediately after the end of the pulse. The motor of the triggering valve 316 at the moment of maximum opening of the output hole of the pulse generator receives a signal when the contact 317 is terminated and switches the triggering valve 316 to position 1. Thus the working fluid under pressure from region 305a and from intake line 312a pass into the annular triggering channel 332 and triggering chamber 313 and further pass to the region 305b (through the free directions of valvular conduits 321a and hollow rods 325, 327), The membrane 320 returns to its original state due to return spring force Fs2 and Fmem and due to sudden pressure redistribution between the regions 305a and 305b. The spring 322 of parallelogram 323 is contracted to its original state under the force Fs2, stoppers 324 of parallelogram 323 come into contact with the opposite levers, the holder 328 places the plug 308 on the seat 329 in position 1 shown in figure 10A.

These transient quazi-simultaneous actions cause the junction flexible plug 308 to the seat 329 immediately after the pulse, and bring the pulse generator 203 for the next pulse with minimal loss of working fluid into turbine under maximum ratio of pressure energy conversion into kinetic energy.

Designed volume of region 305a is provided minimal, as well as the designed volume of the triggering chamber 313 to ensure the maximum speed of full charge - discharge cycle of the pulse generator 203. The plug spring 329 performs the function of a plug 308 closer and a device that softens shock loads on the plug 308.

The operation of the pulse generator 203 shown in Figs.10A; 10B; and 10C is only possible due to the fact that the parallelogrammic mechanism 318 and the parallelogram 323 are not rigidly mechanically connected to the casing 300 of the pulse generator 203, which is a very important aspect.

Low-amplitude repetitive vibrations of membrane 320 have significant power and speed at almost any significant pressure of working fluid, which provides a large amplitude of reciprocating motion of the plug 308 of the pulse generator 203 with a very small amplitude of the center of membrane 320, which is another important aspect.

The energy of the reciprocating motion of the plug 308 is directly proportional to the energy of working fluid at a given pressure.

For the manufacture of a parallelogrammic mechanism 318 having at least three equal parallelorgammic lever structures and parallelogram 323, light and strong composite materials are used. Said composite materials comprise at least a matrix of a first material and fillers of a different material (such as carbon fiber and bioplastics). In places of traditional hinge joints, flexible plate joints are preferably used. For example, flexible joints can be made of thin plates made of spring steel designed for low-amplitude bending. parallelogrammic mechanism 318 preferably shall be produced as flexible three-dimensional structure that can be made of composite or polymer materials in the form of a single lightweight 3D structure (externally resembling the construction of an umbrella). The various lever zones of the parallelogrammic mechanism 318 shall be set with lower degree of rigidity at the bending points (where the joints are normally located) and with a higher degree of rigidity in the load-bearing arms. To reduce the significant inertia forces when the pulse generator 203 is operating, the weight of the parts used to manufacture the parallelogram mechanism 318, parallelogram 323, and cover 308 must be preferably reduced by using light materials.

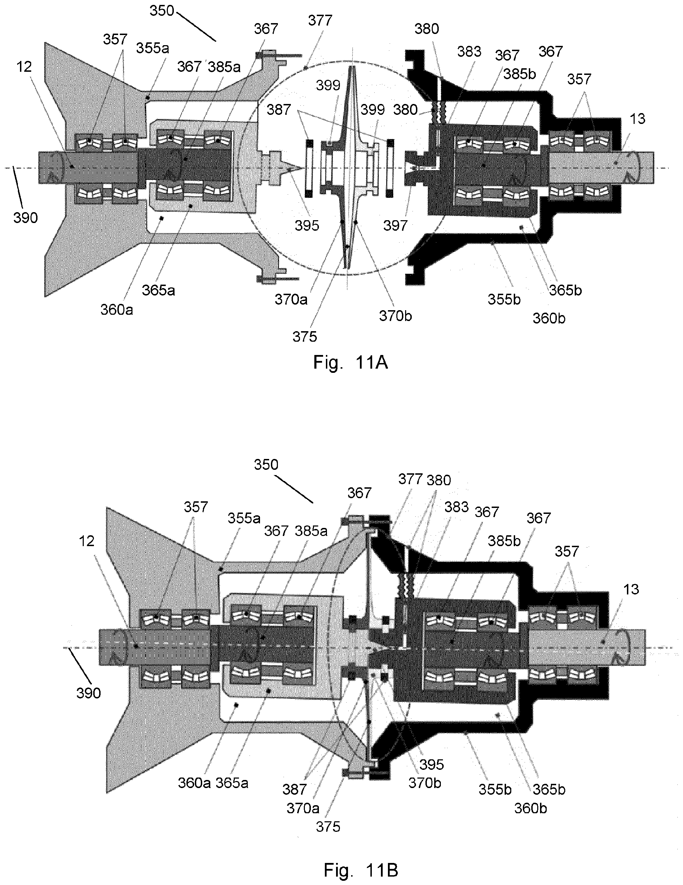

Figs. 11A and 11B show a first example of a precessional vacuum coupling 350 not covered by the present invention.

The vacuum coupling 350 comprises a first housing halve 355a and a second housing halve 355b. The first housing halve 355a is provided with a through hole arranged to house -with the interposition of bearings 357- the rotating shaft 12 of the expansion device 2. A first hollow internal space 360a is also provided. In turn, the second housing halve 355b is provided with a through hole arranged to house -with the interposition of bearings 357- the driven shaft 13 of the electric generator 7. A second hollow internal space 360b is also provided.

A first crankshaft 365a, housed in the first internal space 360a, is connected to the rotating shaft 12 by means of a first hollow precessing rod 385a including bearings 367, while a second crankshaft 365b, housed in the second internal space 360b, is connected to the driven shaft 13 by means of a second hollow precessing rod 385b including bearings 367. In the operation position of the vacuum coupling 350, the first crankshaft 365a and the second crankshaft 365b share a common axis 390.

In this particular example, shown in Figs. 11A and 11B, the tip of the first crankshaft 365a is provided with a conical feather 395, while the tip of the second crankshaft 365b is provided with a conical cavity 397. In addition, a recess in the tip of the first crankshaft 365a is intended to fit with the ridge of a first vacuum disk 370a, while a recess in the tip of the second crankshaft 365b is intended to fit with the ridge of a second vacuum disk 370b. A sealing flexible membrane 375 is interposed between the first vacuum disk 370a and the second vacuum disk 370b. In addition, the first vacuum disk 370a and the second vacuum disk 370b are provided with grooves 399 intended to house the strengthening rings 387.

The vacuum coupling 350 is also provided with one vacuum channel 380 which, in this particular example comprises a hole which passes through the upper part of the second housing 355b, a hole which passes through the tip of the second crankshaft 365b and hole which passes through the second vacuum disk 370b and reaches to the sealing flexible membrane 375m, the vacuum channel 380 also comprises a flexible tube disposed between the second housing 355b and the second crankshaft 365b. A Non return valve 383 is also disposed inside the vacuum channel 380.

During the operation of the vacuum coupling 350, the source of negative pressure at the other end of the vacuum coupling (not shown in the figures for simplicity) creates a vacuum bonding area 377 in the periphery of the sealing flexible membrane 375 which induces a bonding of the first vacuum disk 370a with the second vacuum disk 370b and the sealing flexible membrane 375, thereby providing an accurate and rigid connection of said parts. In addition, said vacuum bonding prevents the rotating shaft 12 and the driven shaft 13 from performing radial, angular or axial movements relative to each other and relative to the sealing flexible membrane 375.

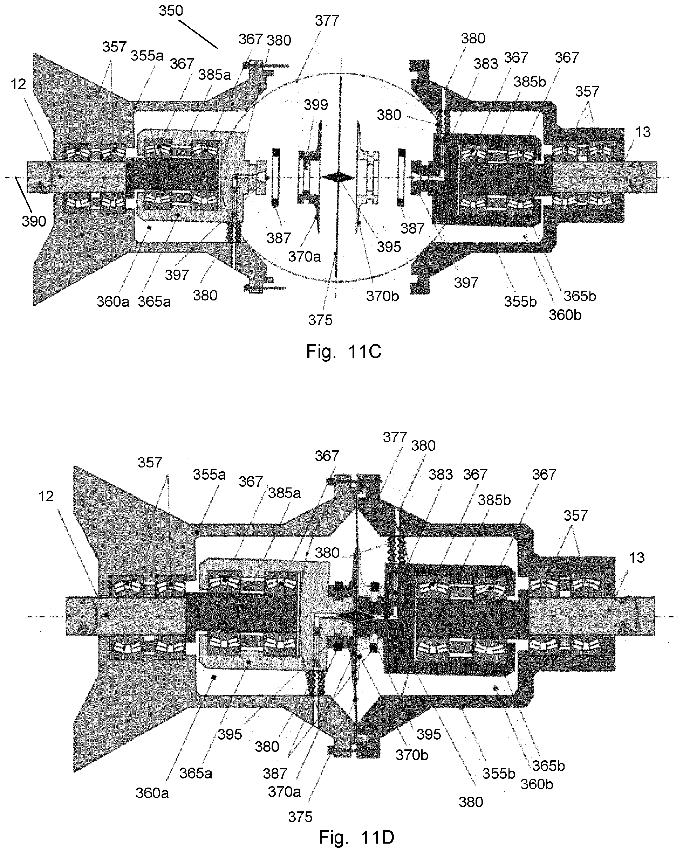

Figs. 11C and 11D show a second example of a precessional vacuum coupling 350 not covered by the present invention.

Said vacuum coupling 350 is similar to the one shown in Figs. 11A and 11B except for the following features: in this second example the vacuum coupling 350 each face of the flexible sealing membrane 375 is provided with a conical feather 395, while the tip of the first crankshaft 365a and the tip of the second crankshaft 365b are provided with conical cavities 397 intended to house said conical feathers 395.

On the other hand, in the second example shown in Figs. 11C and 11D two different vacuum channels are provided.

The first vacuum channel 380 passes through the first housing 355a, through the first crankshaft 365a and through the first vacuum disk 370b until it reaches to the sealing flexible membrane 375. Said first vacuum channel 380 also comprises a flexible tube disposed between the first housing 355a and the first crankshaft 365a. Similarly, the second vacuum channel 380 passes through the second housing 355b, through the second crankshaft 365b and through the second vacuum disk 370b until it reaches to the sealing flexible membrane 375. The second vacuum channel 380 also comprises a flexible tube disposed between the second housing 355b and the second crankshaft 365a. Inside each of the vacuum channels 380 there is provided a respective non return valve 383.

**Claims**

**1.** System for converting thermal energy into mechanical energy which comprises:

- at least one boiler (5, 6) connected to an external heat source (Q), said boiler (5, 6) having at least one intake and at least one outlet, the temperature at the outlet being higher than the temperature at the intake;
- a pressurized working circuit (10, 10a), through which a working stream circulates, a first section (10a) of said working circuit being connected an outlet of the boiler (5, 6) and a second section (10) of said working circuit being connected an intake of the boiler (5, 6), the working circuit (10, 10a) being configured such that the working stream gains thermal energy from the external heat source when it circulates throughout the boiler (5, 6);
- an expansion device (2), located downstream the first section (10a) of the working circuit and being configured such that the working stream expands inside the expansion device (2) and converts part of its thermal energy into mechanical energy, after which the working stream turns into a spent working stream and leaves the expansion device through the second section (10) of the working circuit;
- a first heater (3) located upstream the expansion device (2), configured such that the working stream is superheated -gaining thermal energy- before entering into the expansion device (2);

**characterized in that** it also comprises:

- a pressurized auxiliary circuit (10b), configured for directing an auxiliary stream from an outlet of the boiler (5, 6) to a main inlet (I) of at least one vortex tube;
- at least one vortex tube, -having a main inlet (I), an accessory inlet (IV), a hot output (III) and a cold output (II)- said vortex tube being configured such that the auxiliary stream is divided into a hot auxiliary stream and a cold auxiliary stream circulating in opposite directions, the temperature of the hot auxiliary stream being higher than the temperature of the cold auxiliary stream;
- a hot auxiliary circuit (32, 33, 33a), through which the hot auxiliary stream circulates, a first end of the hot auxiliary circuit (32, 33, 33a) being connected to the hot output (III) of at least one vortex tube and a second end of the hot auxiliary circuit being connected to the intake of the boiler (5,6), the hot auxiliary circuit (32, 33, 33a) also passing through the first heater (3) so at least part of the hot auxiliary stream heats the working stream while passing through the first heater (3);
- a cold auxiliary circuit (30, 31), through which the cold auxiliary stream circulates, one first end of the cold auxiliary circuit being connected to the cold output (II) of at least one vortex tube and one second end of the cold auxiliary circuit being connected to the accessory inlet (IV) of a vortex tube, the cold auxiliary circuit (30, 31) passing through a first condenser (4) and/or a second condenser (25), so at least part of the cold auxiliary stream condensates the spent working stream, said spent working stream also passing through said condensers (4, 25) and having a higher temperature than the cold auxiliary stream.

2.  System according to claim 1, wherein the boiler (5,6) has a first inner space (5) through which the auxiliary stream circulates, and second inner space (6) through which the working stream circulates, the first and second inner spaces (5, 6) of the boiler being physically separated from each other, but being configured such that they can exchange thermal energy with each other..

3.  System according to any previous claim, wherein the cold auxiliary circuit (30, 31) passes through a collector (26) for liquid condensate; the collector (26) being in contact with a pump (27), the pump (27) being, in turn, connected to a first end of a liquid condensate circuit (34), and the second end of the liquid condensate circuit (34) being connected to an inlet of the boiler (5, 6).

4.  System according to any previous claim, wherein the cold auxiliary circuit (30) and the second section (10) of the working circuit pass through the first condenser (4), so the cold auxiliary stream condenses the spent working stream.

5.  System according to any previous claim, wherein:

    - the system also comprises an absorbent circuit (36, 37), through which a stream of absorbent, having a high boiling temperature, circulates;
    - the hot auxiliary circuit (32, 33) is divided into two different branches:

        i) a first branch (32) of the hot auxiliary circuit passing through the first heater (3), said first branch (32) being configured such that it superheats the working stream, and
        ii) a second branch (33) of the hot auxiliary stream passing through a second heater (3a), said second branch (33) being configured such that it heats the absorbent stream; and

    - the first section (30) of the cold auxiliary circuit is divided into two different branches:

        iii) a first branch of the first section (31) of the cold auxiliary circuit passing through the first condenser (4), said first branch of the first section (31) being configured such that it condenses the spent working stream, and
        iv) a second branch of the first section (31) of the cold auxiliary circuit passing through the second condenser (25), said second branch of the first section (31) being configured such that it condenses the absorbent stream.

6. System according to claim 5, wherein:

- the first section (37) of the absorbent circuit is connected, by one first end to a separator (24), and is connected by a second end to a mixer (9), the absorbent mixing inside the mixer with at least part of the cold auxiliary stream;
- the second section (36) of the absorbent circuit, is connected by one first end to the mixer (9), and is connected by a second end to a cavitation device (17), and
- the cavitation device (17) is connected to a first return conduit (28) in contact with an inlet of the boiler (5, 6), the cavitation device (17) being also connected to a lean stream conduit (29) which passes through a third heater (19) and ends in the separator (24).

7. System according to claim 6, wherein the separator (24) is connected to a second return conduit (38) in contact with an inlet of the boiler (5, 6); the separator (24) also being in contact with the second condenser (25).

8. System according to any of claims 1 to 3, wherein:

- the system also comprises an absorbent circuit (36, 37), through which a stream of absorbent -having a boiling temperature above 90°C at normal atmospheric pressure-circulates;
- the hot auxiliary circuit (32, 33) is divided into two different branches:

a) a first branch (32) of the hot auxiliary circuit passes through the first heater (3), said first branch (32) being configured such that it superheats the working stream, the first branch (32) of the hot auxiliary circuit also passing through the second heater (3a), said first branch (32) being also configured such that it heats the absorbent stream;
b) a second branch (33) of the hot auxiliary circuit passes through a third heater (19), said second branch (33) being configured such that it heats the absorbent stream;

- the cold auxiliary circuit (30, 31) passes through the second condenser (25), said cold auxiliary circuit (30, 31) being configured such that it condensates the absorbent stream.

9. System according to claim 8, wherein:

- the first section (37) of the absorbent circuit is connected, by one first end to a separator (24), and is connected by a second end to the cavity (9) of the hollow shaft (12) of the expansion device (2), the first section (37) of the absorbent circuit being configured such that the absorbent mixes inside the said cavity (9) with the spent working stream;
- the second section (36) of the absorbent circuit, is connected by one first end to a pump (8) which is in contact with the cavity (9) of the hollow shaft (12) of the expansion device (2), the second section (36) of the absorbent circuit being connected by a second end to a cavitation device (17), and
- the cavitation device (17) is connected to a first return conduit (28) in contact with an inlet of the boiler (5, 6), the cavitation device (17) being also connected to a lean stream conduit (29) which passes through a third heater (3a) and ends in the separator (24).

10. System according to claim 1 further comprising a vortex tube which comprises:

- a hollow body (100) axially elongated;
- a main inlet (I) connected to a swirl chamber (110) communicated with the interior of the elongated hollow body (100), the main inlet (I) being configured for injecting tangentially into the swirl chamber (110) a pressurized stream (130), such that the pressurized stream (130) accelerates inside the hollow body (100) creating a vortex (113, 114) of pressurized stream;
- a hot output (III), neighboring a throttle body (160) defining axially peripheral annular nozzle (140), the annular nozzle (140) being disposed inside the hollow body (100) at one first end of said elongated hollow body (100), and being configured such that the annular nozzle only allows the axially peripheral part (114) of the vortex pressurized stream to leave through the hot output;
- a cold output (II), located at an axially central part of the second end of the elongated hollow body, the cold output (II) being configured such that only the axially central part (113) of the vortex pressurized stream is allowed to leave through the cold output (II); the vortex being **characterized in that** it also comprises an auxiliary inlet (IV), one end of said auxiliary inlet being disposed at axially central position inside the elongated body (100) neighboring the first end of said elongated body (100) and axially opposed to the cold output (II).

11. System according to claim 10, wherein the surface (119) of the throttle body (160) which is closer to the cold output (II), has the shape of a concave cup.

12. System according to claim 10, wherein the surface (119a) of the throttle body (160) which is closer to the cold output (II), has a conical shape.

13. System according to any of claims 10 to 12, wherein, the auxiliary inlet (IV) is provided with a second swirl chamber (120) positioned inside throttle body (160).

14. Use of at least one vortex tube in a system for converting thermal energy into mechanical energy according to any of claims 1 to 9, wherein said vortex tube comprises:

- a hollow body (100) axially elongated;
- a main inlet (I) connected to a swirl chamber (110) communicated with the interior of the elongated hollow body (100), the main inlet (I) being configured for injecting tangentially into the swirl chamber (110) a pressurized stream (130), such that the pressurized stream (130) accelerates inside the hollow body (100) creating a vortex (113, 114) of pressurized stream;
- a hot output (III), neighboring a throttle body (160) defining axially peripheral annular nozzle (140), the annular nozzle (140) being disposed inside the hollow body (100) at one first end of said elongated hollow body (100), and being configured such that the annular nozzle only allows the axially peripheral part (114) of the vortex pressurized stream to leave through the hot output;
- a cold output (II), located at an axially central part of the second end of the elongated hollow body, the cold output (II) being configured such that only the axially central part (113) of the vortex pressurized stream is allowed to leave through the cold output (II);

the vortex tube being **characterized in that** it also comprises an auxiliary inlet (IV), one end of said auxiliary inlet being disposed at axially central position inside the elongated body (100) neighboring the first end of said elongated body (100) and axially opposed to the cold output (II).

**Patentansprüche**

1. System zum Umwandeln von Wärmeenergie in mechanische Energie, das umfasst:

- wenigstens einen Kessel (5, 6), der mit einer externen Wärmequelle (Q) verbunden ist, wobei der Kessel (5, 6) wenigstens einen Einlass sowie wenigstens einen Auslass aufweist und die Temperatur an dem Auslass höher ist als die Temperatur an dem Einlass;
- einen unter Druck stehenden Arbeitskreislauf (10, 10a), durch den ein Arbeits-Strom zirkuliert, wobei ein erster Abschnitt (10a) des Arbeitskreislaufs mit einem Auslass des Kessels (5, 6) verbunden ist und ein zweiter Abschnitt (10) des Arbeitskreislaufs mit einem Einlass des Kessels (5, 6) verbunden ist, wobei der Arbeitskreislauf (10, 10a) so ausgeführt ist, dass der Arbeits-Strom Wärmeenergie von der externen Wärmequelle aufnimmt, wenn er durch den Kessel (5, 6) zirkuliert;
- eine Expansionsvorrichtung (2), die stromab von dem ersten Abschnitt (10a) des Arbeitskreislaufs angeordnet und so ausgeführt ist, dass sich der Arbeits-Strom im Inneren der Expansionsvorrichtung (2) ausdehnt und einen Teil seiner Wärmeenergie in mechanische Energie umwandelt, und anschließend der Arbeits-Strom zu einem verbrauchten Arbeits-Strom wird und die Expansionsvorrichtung über den zweiten Abschnitt (10) des Arbeitskreislaufs verlässt;
- eine erste Heizvorrichtung (3), die stromauf von der Expansionsvorrichtung (2) angeordnet und so ausgeführt ist, dass der Arbeits-Strom vor Eintreten in die Expansionsvorrichtung (2) überhitzt wird und dabei Wärmeenergie aufnimmt;

**dadurch gekennzeichnet, dass** es darüber hinaus umfasst:

- einen unter Druck stehenden Hilfskreislauf (10b), der so ausgeführt ist, dass er einen Hilfsstrom von einem Auslass des Kessels (5, 6) zu einem Haupt-Einlass (I) wenigstens eines Wirbelrohrs leitet;
- wenigstens ein Wirbelrohr mit einem Haupt-Einlass (I), einem Zusatzeinlass (IV), einem Heiß-Ausgang (III) und einem Kalt-Ausgang (II), wobei das Wirbelrohr so ausgeführt ist, dass der Hilfsstrom in einen Heiß-Hilfsstrom und einen Kalt-Hilfsstrom unterteilt wird, die in entgegengesetzten Richtungen zirkulieren, und die Temperatur des Heiß-Hilfsstroms höher ist als die Temperatur des Kalt-Hilfsstroms;
- einen Heiß-Hilfskreislauf (32, 33, 33a), durch den der Heiß-Hilfsstrom zirkuliert, wobei ein erstes Ende des Heiß-Hilfskreislaufs (32, 33, 33a) mit dem Heiß-Ausgang (III) wenigstens eines Wirbelrohrs verbunden ist und ein zweites Ende des Heiß-Hilfskreislaufs mit dem Einlass des Kessels (5, 6) verbunden ist, wobei der Heiß-Hilfskreislauf (32, 33, 33a) darüber hinaus die erste Heizvorrichtung (3) durchläuft, so dass wenigstens ein Teil des Heiß-Hilfsstroms den Arbeits-Strom erwärmt, während er durch erste Heizvorrichtung (3) durchläuft;
- einen Kalt-Hilfskreislauf (30, 31), durch den der Kalt-Hilfsstrom zirkuliert, wobei ein erstes Ende des Kalt-Hilfskreislaufs mit dem Kalt-Ausgang (II) wenigstens eines Wirbelrohrs verbunden ist und ein zweites Ende des Kalt-Hilfskreislaufs mit dem Zusatzeinlass (IV) eines Wirbelrohrs verbunden ist, wobei der Kalt-Hilfskreislauf (30, 31) einen ersten Kondensator (4) und/oder einen zweiten Kondensator (25) durchläuft, so dass wenigstens ein Teil des Kalt-Hilfsstroms den verbrauchten Arbeits-Strom kondensiert, wobei der verbrauchte Arbeits-Strom darüber hinaus die Kondensatoren (4, 25) durchläuft und eine höhere Temperatur hat als der Kalt-Hilfsstrom.

2. System nach Anspruch 1, wobei der Kessel (5, 6) einen ersten Innenraum (5), durch den der Hilfsstrom zirkuliert, sowie einen zweiten Innenraum (6) aufweist, durch den der Arbeits-Strom zirkuliert, wobei der erste und der zweite Innenraum (5, 6) des Kessels physisch voneinander getrennt, jedoch so ausgeführt sind, dass sie Wärmeenergie miteinander austauschen können.

3. System nach einem der vorangehenden Ansprüche, wobei der Kalt-Hilfskreislauf (30, 31) einen Sammler (26) für flüssiges Kondensat durchläuft; der Sammler (26) mit einer Pumpe (27) in Kontakt ist, die Pumpe (27) ihrerseits mit einem ersten Ende eines Kreislaufs (34) für flüssiges Kondensat verbunden ist und das zweite Ende des Kreislaufs (34) für flüssiges Kondensat mit einem Einlass des Kessels (5, 6) verbunden ist.

4. System nach einem der vorangehenden Ansprüche, wobei der Kalt-Hilfskreislauf (30) und der zweite Abschnitt (10) des Arbeitskreislaufs den ersten Kondensator (4) durchlaufen, so dass der Kalt-Hilfsstrom den verbrauchten Arbeits-Strom kondensiert.

5. System nach einem der vorangehenden Ansprüche, wobei:

- das System darüber hinaus einen Absorptionsmittel-Kreislauf (36, 37) umfasst, durch den ein Strom von Absorptionsmittel mit hoher Siedetemperatur zirkuliert;
- der Heiß-Hilfskreislauf (32, 33) in zwei verschiedene Zweige unterteilt ist:

i) einen ersten Zweig (32) des Heiß-Hilfskreislaufs, der die erste Heizvorrichtung (3) durchläuft, wobei der erste Zweig (32) so ausgeführt ist, dass er den Arbeits-Strom überhitzt, sowie
ii) einen zweiten Zweig (33) des Heiß-Hilfskreislaufs, der eine zweite Heizvorrichtung (3) durchläuft, wobei der zweite Zweig (33) so ausgeführt ist, dass er den Absorptionsmittel-Strom erhitzt, und

- der erste Abschnitt (30) des Kalt-Hilfskreislaufs in zwei verschiedene Zweige unterteilt ist:

iii) einen ersten Zweig des ersten Abschnitts (31) des Kalt Hilfskreislaufs, der den ersten Kondensator (4) durchläuft, wobei der erste Zweig des ersten Abschnitts (31) so ausgeführt ist, dass er den verbrauchten Arbeits-Strom kondensiert, und
iv) einen zweiten Zweig des ersten Abschnitts (31) des Kalt Hilfskreislaufs, der den zweiten Kondensator (25) durchläuft, wobei der zweite Zweig des ersten Abschnitts (31) so ausgeführt ist, dass er den Absorptionsmittel-Strom kondensiert.

6. System nach Anspruch 5, wobei:

- der erste Abschnitt (37) des Absorptionsmittel-Kreislaufs über ein erstes Ende mit einer Abscheidevorrichtung (24) verbunden ist und über ein zweites Ende mit einer Mischvorrichtung (9) verbunden ist, wobei sich das Absorptionsmittel im Inneren der Mischvorrichtung mit wenigstens einem Teil des Kalt-Hilfsstroms vermischt;
- der zweite Abschnitt (36) des Absorptionsmittel-Kreislaufs über ein erstes Ende mit der Mischvorrichtung (9) verbunden ist und über ein zweites Ende mit einer Kavitationsvorrichtung (17) verbunden ist, und

- die Kavitationsvorrichtung (17) mit einer ersten Rücklaufleitung (28) verbunden ist, die in Kontakt mit einem Einlass des Kessels (5, 6) ist, wobei die Kavitationsvorrichtung (17) darüber hinaus mit einer Magerstrom-Leitung (29) verbunden ist, die eine dritte Heizvorrichtung (19) durchläuft und in der Abscheidevorrichtung (24) endet.

7. System nach Anspruch 6, wobei die Abscheidevorrichtung (24) mit einer zweiten Rücklaufleitung (38) verbunden ist, die in Kontakt mit einem Einlass des Kessels (5, 6) ist; wobei die Abscheidevorrichtung (24) darüber hinaus in Kontakt mit dem zweiten Kondensator (25) ist.

8. System nach einem der Ansprüche 1 bis 3, wobei:

- das System darüber hinaus einen Absorptionsmittel-Kreislauf (36, 37) umfasst, durch den ein Strom von Absorptionsmittel mit einer Siedetemperatur von über 90 °C bei normalem atmosphärischem Druck zirkuliert;
- der Heiß-Hilfskreislauf (32, 33) in zwei verschiedene Zweige unterteilt ist:

a) einen ersten Zweig (32) des Heiß-Hilfskreislaufs, der die erste Heizvorrichtung (3) durchläuft, wobei der erste Zweig (32) so ausgeführt ist, dass er den Arbeits-Strom überhitzt, der erste Zweig (32) des Heiß-Hilfskreislaufs darüber hinaus die zweite Heizvorrichtung (3a) durchläuft und der erste Zweig (32) darüber hinaus so ausgeführt ist, dass er den Absorptionsmittel-Strom erhitzt:
b) einen zweiten Zweig (33) des Heiß-Hilfskreislaufs, der eine dritte Heizvorrichtung (19) durchläuft, wobei der zweite Zweig (33) so ausgeführt ist, dass er den Absorptionsmittel-Strom erhitzt;

- der Kalt-Hilfskreislauf (30, 31) den zweiten Kondensator (25) durchläuft, wobei der Kalt-Hilfskreislauf (30, 31) so ausgeführt ist, dass er den Absorptionsmittel-Strom kondensiert.

9. System nach Anspruch 8, wobei:

- der erste Abschnitt (37) des Absorptionsmittel-Kreislaufs über ein erstes Ende mit einer Abscheidevorrichtung (24) verbunden ist und über ein zweites Ende mit dem Hohlraum (9) der Hohlwelle (12) der Expansionsvorrichtung (2) verbunden ist, wobei der erste Abschnitt (37) des Absorptionsmittel-Kreislaufs so ausgeführt ist, dass sich das Absorptionsmittel im Inneren des Hohlraums (9) mit dem verbrauchten Arbeits-Strom vermischt;
- der zweite Abschnitt (36) des Absorptionsmittel-Kreislaufs über ein erstes Ende mit einer Pumpe (8) verbunden ist, die in Kontakt mit dem Hohlraum (9) der Hohlwelle (12) der Expansionsvorrichtung (2) ist, und der zweite Abschnitt (36) des Absorptionsmittel-Kreislaufs über ein zweites Ende mit einer Kavitationsvorrichtung (17) verbunden ist, und
- die Kavitationsvorrichtung (17) mit einer ersten Rücklaufleitung (28) verbunden ist, die in Kontakt mit einem Einlass des Kessels (5, 6) ist, wobei die Kavitationsvorrichtung (17) darüber hinaus mit einer Magerstrom-Leitung (29) verbunden ist, die eine dritte Heizvorrichtung (3a) durchläuft und in der Abscheidevorrichtung (24) endet.

10. System nach Anspruch 1, das des Weiteren ein Wirbelrohr umfasst, das umfasst:

- einen in axialer Richtung länglichen Hohlkörper (100);
- einen Haupt-Einlass (I), der mit einer Wirbelkammer (110) verbunden ist, die mit dem Innenraum des länglichen Hohlkörpers (100) in Verbindung steht, wobei der Haupt-Einlass (I) so ausgeführt ist, dass er einen unter Druck stehenden Strom (130) tangential in die Wirbelkammer (110) einspritzt, so dass der unter Druck stehende Strom (130) sich im Inneren des Hohlkörpers (100) beschleunigt und einen Wirbel (113, 114) des unter Druck stehenden Stroms erzeugt;
- einen Heiß-Ausgang (III), der benachbart zu einem Drosselkörper (160) ist, der eine in axialer Richtung periphere ringförmige Düse (140) bildet, wobei die ringförmige Düse (140) im Inneren des Hohlkörpers (100) an einem ersten Ende des länglichen Hohlkörpers (100) angeordnet ist, und der so ausgeführt ist, dass die ringförmige Düse nur den in axialer Richtung peripheren Teil (114) des Wirbels des unter Druck stehenden Stroms über den Heiß-Ausgang austreten lässt;
- einen Kalt-Ausgang (II), der an einem in axialer Richtung mittigen Teil des zweiten Endes des länglichen Hohlkörpers angeordnet ist, wobei der Kalt-Ausgang (II) so ausgeführt ist, dass nur der in axialer Richtung mittige Teil (113) des Wirbels des unter Druck stehenden Stroms über den Kalt-Ausgang (II) austreten kann;

wobei der Wirbel **dadurch gekennzeichnet ist, dass** er darüber hinaus einen Hilfs-Einlass (IV) umfasst, und ein Ende des Hilfs-Einlasses an in axialer Richtung mittiger Position im Inneren des länglichen Körpers (100) benachbart zu dem ersten Ende des länglichen Körpers (100) und in axialer Richtung dem Kalt-Ausgang (II) gegenüberliegend angeordnet ist.

**11.** System nach Anspruch 10, wobei die Fläche (119) des Drosselkörpers (160), die sich näher an dem Kalt-Ausgang (II) befindet, die Form einer konkaven Schale hat.

**12.** System nach Anspruch 10, wobei die Fläche (119a) des Drosselkörpers (160), die sich näher an dem Kalt-Ausgang (II) befindet, eine konische Form hat.

**13.** System nach einem der Ansprüche 10 bis 12, wobei der Hilfs-Einlass (IV) mit einer zweiten Wirbelkammer (120) versehen ist, die im Inneren des Drosselkörpers (160) positioniert ist.

**14.** Einsatz wenigstens eines Wirbelrohrs in einem System zum Umwandeln von Wärmeenergie in mechanische Energie nach einem der Ansprüche 1 bis 9, wobei das Wirbelrohr umfasst:

- einen in axialer Richtung länglichen Hohlkörper (100);
- einen Haupt-Einlass (I), der mit einer Wirbelkammer (110) verbunden ist, die mit dem Innenraum des länglichen Hohlkörpers (100) in Verbindung steht, wobei der Haupt-Einlass (I) so ausgeführt ist, dass er einen unter Druck stehenden Strom (130) tangential in die Wirbelkammer (110) einspritzt, so dass der unter Druck stehende Strom (130) sich im Inneren des Hohlkörpers (100) beschleunigt und einen Wirbel (113, 114) des unter Druck stehenden Stroms erzeugt;
- einen Heiß-Ausgang (III), der benachbart zu einem Drosselkörper (160) ist, der eine in axialer Richtung periphere ringförmige Düse (140) bildet, wobei die ringförmige Düse (140) im Inneren des Hohlkörpers (100) an einem ersten Ende des länglichen Hohlkörpers (100) angeordnet ist, und der so ausgeführt ist, dass die ringförmige Düse nur den in axialer Richtung peripheren Teil (114) des Wirbels des unter Druck stehenden Stroms über den Heiß-Ausgang austreten lässt;
- einen Kalt-Ausgang (II), der an einem in axialer Richtung mittigen Teil des zweiten Endes des länglichen Hohlkörpers angeordnet ist, wobei der Kalt-Ausgang (II) so ausgeführt ist, dass nur der in axialer Richtung mittige Teil (113) des Wirbels des unter Druck stehenden Stroms über den Kalt-Ausgang (II) austreten kann;

wobei das Wirbelrohr **dadurch gekennzeichnet ist, dass** es darüber hinaus einen Hilfs-Einlass (IV) umfasst, und ein Ende des Hilfs-Einlasses an in axialer Richtung mittiger Position im Inneren des länglichen Körpers (100) benachbart zu dem ersten Ende des länglichen Körpers (100) und in axialer Richtung dem Kalt-Ausgang (II) gegenüberliegend angeordnet ist.

**Revendications**

**1.** Système de conversion d'énergie thermique en énergie mécanique qui comprend:

- au moins une chaudière (5, 6) reliée à une source de chaleur externe (Q), ladite chaudière (5, 6) ayant au moins une entrée et au moins une sortie, la température à la sortie étant plus élevée que la température à l'entrée;
- un circuit de travail sous pression (10, 10a), à travers lequel circule un courant de travail, une première section (10a) dudit circuit de travail étant reliée à une sortie de la chaudière (5, 6) et une deuxième section (10) dudit circuit de travail étant reliée à une entrée de la chaudière (5, 6), le circuit de travail (10, 10a) étant configuré de telle sorte que le courant de travail acquière de l'énergie thermique provenant de la source de chaleur externe lorsqu'il circule à travers la chaudière (5, 6);
- un dispositif de détente (2), situé en aval de la première section (10a) du circuit de travail et étant configuré de telle sorte que le courant de travail se détend à l'intérieur du dispositif de détente (2) et convertit une partie de son énergie thermique en énergie mécanique, après quoi le courant de travail se transforme en un courant de travail usé et quitte le dispositif de détente à travers la deuxième section (10) du circuit de travail;
- un premier réchauffeur (3) situé en amont du dispositif de détente (2), configuré de telle sorte que le courant de travail est surchauffé - acquérant de l'énergie thermique - avant d'entrer dans le dispositif de détente (2);

**caractérisé en ce qu'**il comprend également:

- un circuit auxiliaire sous pression (10b), configuré pour diriger un courant auxiliaire d'une sortie de la chaudière (5, 6) vers une entrée principale (I) d'au moins un tube vortex;
- au moins un tube vortex, - ayant une entrée principale (I), une sortie accessoire (IV), une sortie chaude (III) et une sortie froide (II), - ledit tube vortex étant configuré de telle sorte que le courant auxiliaire est divisé en un courant auxiliaire chaud et un courant auxiliaire froid circulant dans des directions opposées, la température du courant auxiliaire chaud étant plus élevée que la température du courant auxiliaire froid;
- un circuit auxiliaire chaud (32, 33, 33a), à travers lequel circule le courant auxiliaire chaud, une première extrémité du circuit auxiliaire chaud (32, 33, 33a) étant reliée à la sortie chaude (III) d'au moins un tube vortex et une deuxième extrémité du circuit auxiliaire chaud étant reliée à l'entrée de la chaudière (5, 6), le circuit auxiliaire chaud (32, 33, 33a) passant également à travers le premier réchauffeur (3) de sorte qu'au moins une partie du courant auxiliaire chaud chauffe le courant de travail tandis qu'il passe à travers le premier réchauffeur (3);
- un circuit auxiliaire froid (30, 31) à travers lequel circule le courant auxiliaire froid, une première extrémité du circuit auxiliaire froid étant reliée à la sortie froide (II) d'au moins un tube vortex et une deuxième extrémité du circuit auxiliaire froid étant reliée à l'entrée accessoire (IV) d'un tube vortex, le circuit auxiliaire froid (30, 31) passant à travers un premier condenseur (4) et/ou un deuxième condenseur (25), de sorte qu'au moins une partie du courant auxiliaire froid condense le courant de travail usé, ledit courant de travail usé passant aussi à travers lesdits condenseurs (4, 25) et ayant une température plus élevée que le courant auxiliaire froid.

2. Système selon la revendication 1, dans lequel la chaudière (5, 6) a un premier espace intérieur (5) à travers lequel circule le courant auxiliaire, et un deuxième espace intérieur (6) à travers lequel circule le courant de travail, les premier et deuxième espaces intérieurs (5, 6) de la chaudière étant physiquement séparés l'un de l'autre, mais étant configurés de telle sorte qu'ils peuvent échanger de l'énergie thermique l'un avec l'autre.

3. Système selon l'une quelconque des revendications précédentes, dans lequel le circuit auxiliaire froid (30, 31) passe à travers un collecteur (26) pour condensat liquide; le collecteur (26) étant en contact avec une pompe (27), la pompe (27) étant, à son tour, reliée à une première extrémité d'un circuit de condensat liquide (34), et la deuxième extrémité du circuit de condensat liquide (34) étant reliée à une entrée de la chaudière (5, 6).

4. Système selon l'une quelconque des revendications précédentes, dans lequel le circuit auxiliaire froid (30) et la deuxième section (10) du circuit de travail passent à travers le premier condenseur (4), de sorte que le courant auxiliaire froid condense le courant de travail usé.

5. Système selon l'une quelconque des revendications précédentes, dans lequel:

   - le système comprend également un circuit d'absorbant (36, 37), à travers lequel circule un courant d'absorbant, ayant une température d'ébullition élevée;
   - le circuit auxiliaire chaud (32, 33) est divisé en deux branches différentes:

      i) une première branche (32) du circuit auxiliaire chaud passant à travers le premier réchauffeur (3), ladite première branche (32) étant configurée de telle sorte qu'elle surchauffe le courant de travail, et
      ii) une deuxième branche (33) du courant auxiliaire chaud passant à travers un deuxième réchauffeur (3a), ladite deuxième branche (33) étant configurée de telle sorte qu'elle chauffe le courant d'absorbant; et

   - la première section (30) du circuit auxiliaire froid est divisée en deux branches différentes:

      iii) une première branche de la première section (31) du circuit auxiliaire froid passant à travers le premier condenseur (4), ladite première branche de la première section (31) étant configurée de telle sorte qu'elle condense le courant de travail usé, et
      iv) une deuxième branche de la première section (31) du circuit auxiliaire froid passant à travers le deuxième condenseur (25), ladite deuxième branche de la première section (31) étant configurée de telle sorte qu'elle condense le courant d'absorbant.

6. Système selon la revendication 5, dans lequel:

   - la première section (37) du circuit d'absorbant est reliée, par une première extrémité, à un séparateur (24), et est reliée par une deuxième extrémité à un mélangeur (9), l'absorbant se mélangeant à l'intérieur du mélangeur avec au moins une partie du courant auxiliaire froid;
   - la deuxième section (36) du circuit d'absorbant, est reliée par une première extrémité au mélangeur (9), et est reliée par une deuxième extrémité à un dispositif de cavitation (17), et
- le dispositif de cavitation (17) est relié à un premier conduit de retour (28) en contact avec une entrée de la chaudière (5, 6), le dispositif de cavitation (17) étant relié également à un conduit de courant pauvre (29) qui passe à travers un troisième réchauffeur (19) et se termine dans le séparateur (24).

7. Système selon la revendication 6, dans lequel le séparateur (24) est relié à un deuxième conduit de retour (38) en contact avec une entrée de la chaudière (5, 6); le séparateur (24) étant également en contact avec le deuxième condenseur (25).

8. Système selon l'une quelconque des revendications 1 à 3, dans lequel:

- le système comprend également un circuit d'absorbant (36, 37), à travers lequel circule un courant d'absorbant
- ayant une température d'ébullition supérieure à 90°C à la pression atmosphérique normale -;
- le circuit auxiliaire chaud (32, 33) est divisé en deux branches différentes:

a) une première branche (32) du circuit auxiliaire chaud passe à travers le premier réchauffeur (3), ladite première branche (32) étant configurée de telle sorte qu'elle surchauffe le courant de travail, la première branche (32) du circuit auxiliaire chaud passant également à travers le deuxième réchauffeur (3a), ladite première branche (32) étant également configurée de telle sorte qu'elle chauffe le courant d'absorbant;
b) une deuxième branche (33) du circuit auxiliaire chaud passe à travers un troisième réchauffeur (19), ladite deuxième branche (33) étant configurée de telle sorte qu'elle chauffe le courant d'absorbant;

- le circuit auxiliaire froid (30, 31) passe à travers le deuxième condenseur (25), ledit circuit auxiliaire froid (30, 31) étant configuré de telle sorte qu'il condense le courant d'absorbant.

9. Système selon la revendication 8, dans lequel:

- la première section (37) du circuit d'absorbant est reliée, par une première extrémité à un séparateur (24), et est reliée par une deuxième extrémité à la cavité (9) de l'arbre creux (12) du dispositif de détente (2), la première section (37) du circuit d'absorbant étant configurée de telle sorte que l'absorbant se mélange à l'intérieur de ladite cavité (9) avec le courant de travail usé;
- la deuxième section (36) du circuit d'absorbant, est reliée par une première extrémité à une pompe (8) qui est en contact avec la cavité (9) de l'arbre creux (12) du dispositif de détente (2), la deuxième section (36) du circuit d'absorbant étant reliée par une deuxième extrémité à un dispositif de cavitation (17), et
- le dispositif de cavitation (17) est relié à un premier conduit de retour (28) en contact avec une entrée de la chaudière (5, 6), le dispositif de cavitation (17) étant également relié à un conduit de courant pauvre (29) qui passe à travers un troisième réchauffeur (3a) et se termine dans le séparateur (24).

10. Système selon la revendication 1 comprenant en outre un tube vortex qui comprend:

- un corps creux (100) allongé axialement;
- une entrée principale (I) reliée à une chambre de tourbillonnement (110) en communication avec l'intérieur du corps creux allongé (100), l'entrée principale (I) étant configurée pour injecter tangentiellement dans la chambre de tourbillonnement (110) un courant sous pression (130), de telle sorte que le courant sous pression (130) accélère à l'intérieur du corps creux (100) créant un vortex (113, 114) de courant sous pression;
- une sortie chaude (III), à proximité d'un corps de papillon (160) définissant une buse annulaire périphérique axialement (140), la buse annulaire (140) étant disposée à l'intérieur du corps creux (100) à une première extrémité dudit corps creux allongé (100), et étant configurée de telle sorte que la buse annulaire permet seulement à la partie périphérique axialement (114) du courant sous pression vortex de sortir par la sortie chaude;
- une sortie froide (II), située au niveau d'une partie centrale axialement de la deuxième extrémité du corps creux allongé, la sortie froide (II) étant configurée de telle sorte que seule la partie centrale axialement (113) du courant sous pression vortex est autorisée à sortir par la sortie froide (II);

le vortex étant **caractérisé en ce qu'**il comprend également une entrée auxiliaire (IV), une extrémité de ladite entrée auxiliaire étant disposée en position centrale axialement à l'intérieur du corps allongé (100) à proximité de la première extrémité dudit corps allongé (100) et opposée axialement à la sortie froide (II).

11. Système selon la revendication 10, dans lequel la surface (119) du corps de papillon (160) qui est plus proche de la sortie froide (II), a la forme d'une coupelle concave.

12. Système selon la revendication 10, dans lequel la surface (119a) du corps de papillon (160) qui est plus proche de la sortie froide (II), a une forme conique.

13. Système selon l'une quelconque des revendications 10 à 12, dans lequel l'entrée auxiliaire (IV) est munie d'une deuxième chambre de tourbillonnement (120) positionnée à l'intérieur du corps de papillon (160).

14. Utilisation d'au moins un tube vortex dans un système de conversion d'énergie thermique en énergie mécanique selon l'une quelconque des revendications 1 à 9, dans lequel ledit tube vortex comprend:

- un corps creux (100) allongé axialement;
- une entrée principale (I) reliée à une chambre de tourbillonnement (110) en communication avec l'intérieur du corps creux allongé (100), l'entrée principale (I) étant configurée pour injecter tangentiellement dans la chambre de tourbillonnement (110) un courant sous pression (130), de telle sorte que le courant sous pression (130) accélère à l'intérieur du corps creux (100) créant un vortex (113, 114) de courant sous pression;
- une sortie chaude (III), à proximité d'un corps de papillon (160) définissant une buse annulaire périphérique axialement (140), la buse annulaire (140) étant disposée à l'intérieur du corps creux (100) à une première extrémité dudit corps creux allongé (100), et étant configurée de telle sorte que la buse annulaire permet seulement à la partie périphérique axialement (114) du courant sous pression vortex de sortir par la sortie chaude;
- une sortie froide (II), située au niveau d'une partie centrale axialement de la deuxième extrémité du corps creux allongé, la sortie froide (II) étant configurée de telle sorte que seule la partie centrale axialement (113) du courant sous pression vortex est autorisée à sortir par la sortie froide (II);

le tube vortex étant **caractérisé en ce qu'**il comprend également une entrée auxiliaire (IV), une extrémité de ladite entrée auxiliaire étant disposée en position centrale axialement à l'intérieur du corps allongé (100) à proximité de la première extrémité dudit corps allongé (100) et opposée axialement à la sortie froide (II).

Fig. 1

Fig. 2

Fig. 3

Fig. 4

Fig. 5

Fig. 6A

FIG. 6B

Fig. 7A

Fig. 7B

Fig. 7C

**FIG. 7D**

Fig. 8A

Fig. 8B

Fig. 8C

Fig. 8D

Fig. 9

S1 > S2

F1 > F2

F2-F1= FR

S3 = 0

Fig. 10A

Fig. 10B

Fig. 10C

Fig. 11A

Fig. 11B

Fig. 11C

Fig. 11D

**EP 4 212 771 B1**

**REFERENCES CITED IN THE DESCRIPTION**

**Patent documents cited in the description**

- US 8418466 B1